Europäisches Patentamt

European Patent Office

Office européen des brevets

(19)

(11) Numéro de publication : **0 091 167**
**B1**

(12) # FASCICULE DE BREVET EUROPÉEN

(45) Date de publication du fascicule du brevet :
**02.01.86**

(51) Int. Cl.⁴ : **H 04 L 27/22**

(21) Numéro de dépôt : **83200461.8**

(22) Date de dépôt : **31.03.83**

(54) **Procédé de correction de fréquence de la porteuse locale dans le récepteur d'un système de transmission de données et récepteur utilisant ce procédé.**

(30) Priorité : **09.04.82 FR 8206289**

(43) Date de publication de la demande :
**12.10.83 Bulletin 83/41**

(45) Mention de la délivrance du brevet :
**02.01.86 Bulletin 86/01**

(84) Etats contractants désignés :
**DE FR GB IT SE**

(56) Documents cités :
**FR-A- 2 342 595**
**US-A- 3 962 637**
**US-A- 3 971 996**
**IBM TECHNICAL DISCLOSURE BULLETIN, vol. 15,**
**no. 1, juin 1972, pages 81-83, New York, USA R.J.**
**GALPIN: "Digital synchronizer"**

(73) Titulaire : **TELECOMMUNICATIONS RADIOELECTRI-**
**QUES ET TELEPHONIQUES T.R.T.**
**88, rue Brillat Savarin**
**F-75013 Paris (FR)**
**FR**
**N.V. Philips' Gloeilampenfabrieken**
**Groenewoudseweg 1**
**NL-5621 BA Eindhoven (NL)**
**DE GB IT SE**

(72) Inventeur : **Deconche, Alain**
**SOCIETE CIVILE S.P.I.D. 209 rue de l'Université**
**F-75007 Paris (FR)**
Inventeur : **Van Uffelen, Jean-Pierre**
**SOCIETE CIVILE S.P.I.D. 209 rue de l'Université**
**F-75007 Paris (FR)**

(74) Mandataire : **Charpail, François et al**
**Société Civile S.P.I.D. 209, rue de l'Université**
**F-75007 Paris (FR)**

## Description

L'invention concerne un procédé de correction de fréquence destiné à corriger la fréquence de la porteuse locale dans le récepteur d'un système de transmission de données dans lequel les données sont transmises par modulation d'une porteuse et un mot de synchronisation du récepteur est transmis avant les données, ce récepteur comportant des moyens pour démoduler le signal reçu à l'aide de signaux en phase et en quadrature avec une porteuse locale, des moyens pour échantillonner les signaux démodulés en phase et en quadrature avec une fréquence d'échantillonnage égale au rythme de modulation, chaque nouvelle paire d'échantillons en phase et en quadrature ainsi formés entrant dans une mémoire pour signal reçu, le récepteur comportant enfin une mémoire pour mot de synchronisation contenant les échantillons en phase et en quadrature d'un mot de synchronisation local identique au mot de synchronisation émis.

L'invention concerne également un récepteur utilisé dans un système de transmission de données et utilisant ce procédé.

On sait que dans les systèmes de transmission de données par modulation d'une porteuse, la restitution correcte des données suppose l'acquisition de plusieurs synchronisations dans le récepteur, notamment la synchronisation de la porteuse locale pour permettre l'opération de démodulation cohérente du signal reçu, la synchronisation d'une horloge locale (appelée aussi synchronisation bit) pour permettre l'échantillonnage optimal du signal démodulé, enfin la synchronisation de trame (appelée aussi synchronisation de mot) pour permettre de repérer le début d'une communication. Pour acquérir ces diverses synchronisations avant le début d'une communication, il est classique de faire précéder chaque communication d'un préambule comportant par exemple une porteuse pure pour la synchronisation de la porteuse locale, une suite alternée de bits « 1 » et « 0 » pour la synchronisation de l'horloge locale et enfin un mot connu pour la synchronisation de trame. Ce système d'acquisition qui comporte pour la synchronisation de la porteuse et pour la synchronisation de l'horloge des boucles d'asservissement de phase ou de fréquence, est très lent et convient mal pour les systèmes de communication numériques modernes par paquets dans lesquels la durée des communications peut être très courte, par exemple de l'ordre de la seconde.

Pour ces systèmes nécessitant une synchronisation rapide du récepteur, il est préférable d'acquérir la synchronisation initiale du récepteur sans utiliser de boucles d'asservissement, en se servant seulement d'un mot de synchronisation transmis et connu dans le récepteur. Dans un article de M. IH. Meyers et L. E. Franks intitulé « Joint Carrier Phase and Symbol Timing Recovery for PAM Systems » et paru dans IEEE Transactions Vol. COM-28, n° 8, août 1980, pages 1121-1129, il est indiqué une méthode de ce genre basée sur le calcul de la fonction de corrélation entre un mot de synchronisation local identique au mot de synchronisation émis et le signal reçu démodulé observé pendant une fenêtre de temps égale à la durée du mot de synchronisation. Selon cette méthode, la synchronisation de la porteuse locale et la synchronisation de l'horloge locale sont acquises simultanément en calculant des valeurs de phases de la porteuse locale et de l'horloge locale, rendant maximale ladite fonction de corrélation. Ces valeurs de phases optimales sont obtenues par extrapolation à partir de valeurs estimées, raisonnablement proches des valeurs optimales. Avec cette méthode connue, la détermination de la phase de la porteuse locale est étroitement liée à la détermination de la phase de l'horloge locale et la mise en œuvre de cette méthode peut être assez difficile.

La présente invention permet également l'acquisition rapide de la synchronisation du récepteur en utilisant seulement un mot de synchronisation émis comme préambule à une communication, mais en procédant de manière tout à fait différente en ce qui concerne la synchronisation de la porteuse locale. L'invention fournit un procédé de correction de fréquence de la porteuse locale, basé sur des mesures d'écarts de fréquence entre la porteuse locale et la porteuse reçue et permettant d'acquérir en une période d'échantillonnage les synchronisations de porteuse, d'horloge et de trame.

Le procédé conforme à l'invention est caractérisé en ce que, pendant chaque période d'échantillonnage, il est effectué au moins une fois la lecture en synchronisme des n paires d'échantillons contenus dans la mémoire pour mot de synchronisation et des n dernières paires d'échantillons entrés dans la mémoire pour signal reçu, afin de déterminer en P étapes ($P \geq 1$) la grandeur de correction de fréquence à apporter à la porteuse locale :

— Pendant chaque étape, il est calculé à partir desdits échantillons lus, au moins une paire de corrélations partielles en phase $C_r(k-1)$, $C_r(k)$ et au moins une paire de corrélations partielles en quadrature $C_i(k-1)$, $C_i(k)$, les corrélations partielles d'ordre $(k-1)$ et $(k)$ dans chaque étape utilisant deux fractions consécutives de même longueur du mot de synchronisation local, les corrélations partielles de l'étape d'ordre $p > 1$ utilisant des fractions du mot de synchronisation de longueur supérieure à celle des fractions utilisées pendant l'étape précédente d'ordre $p - 1$, les corrélations partielles de l'étape d'ordre p étant calculées en prenant en compte la correction de fréquence calculée à l'issue de l'étape précédente d'ordre $p - 1$ ;

— Pendant chaque étape, il est calculé au moins une quantité $E = C_r(k-1) \cdot C_i(k) - C_i(k-1) \cdot C_r(k)$ qui est corrigée en fonction du niveau du signal reçu de façon à fournir une quantité corrigée E* qui est une fonction déterminée

$$E^* = \sin \Delta\varphi \cdot \left[\frac{\sin \dfrac{\Delta\varphi}{2}}{b \sin \dfrac{\Delta\varphi}{2\,b}}\right]^2$$

de l'écart de phase $\Delta\varphi$ produit par l'écart de fréquence $\Delta f$ entre la porteuse locale et la porteuse reçue, pendant un intervalle de temps correspondant au nombre de bits b formant la longueur desdites fractions du mot de synchronisation ;
— A l'issue de chaque étape d'ordre $p \geqslant 1$, il est calculé à partir d'au moins une quantité corrigée $E^*$ formée au cours de l'étape et de la longueur commune des fractions du mot de synchronisation utilisée au cours de l'étape, l'écart de fréquence $\Delta f_p$, puis la somme

$$\sum_{i=1}^{P} \Delta f_i$$

qui constitue une estimation de la grandeur de la correction de fréquence, cette estimation à l'issue de l'étape d'ordre P étant la valeur finale à retenir pour la grandeur de la correction de fréquence à apporter à la porteuse locale.

Le calcul d'un écart de fréquence $\Delta f_p$ dans une étape du procédé de l'invention peut être simplifié si chaque quantité E calculée au cours de cette étape est corrigée en divisant cette quantité E par un terme égal à la somme des carrés de la corrélation partielle en phase et de la corrélation partielle en quadrature ayant servi au calcul de E, de sorte que la quantité E corrigée devient la fonction $E^* = \sin \Delta\varphi$ de l'écart de phase $\Delta\varphi$.

Dans un récepteur dans lequel on applique le procédé de l'invention, il est avantageux d'effectuer la recherche de synchronisation de trame après la dernière étape de calcul de correction de fréquence. Dans ce cas, les moyens prévus dans le récepteur pour former les corrélations partielles jusqu'à la dernière étape P sont commandés en outre, en prenant en compte la correction de fréquence finale calculée à l'issue de l'étape P, pour former les corrélations complètes en phase et en quadrature portant sur la longueur totale du mot de synchronisation, des moyens étant prévus de plus pour former la somme des carrés desdites corrélations complètes en phase et en quadrature et pour comparer cette somme à un seuil, le dépassement de ce seuil indiquant en même temps l'acquisition de la synchronisation de trame et la correction de fréquence à apporter à la porteuse locale pour la transmission de données suivant cette acquisition de synchronisation de trame.

Dans un récepteur de ce genre et dans lequel le signal reçu démodulé est échantillonné avec une fréquence d'échantillonnage j/T multiple du rythme de modulation 1/T, de façon à former j signaux échantillonnés avec la période T et entrelacés, il est avantageux d'effectuer en même temps la recherche de synchronisation de trame et la recherche de la position optimale des instants d'échantillonnage (c'est-à-dire la recherche de la synchronisation de l'horloge locale), après la dernière étape de calcul de correction de fréquence. Dans ce cas les moyens prévus dans le récepteur pour former la grandeur de la correction de fréquence, puis la somme des carrés des corrélations complètes en phase et en quadrature sont utilisés en répartition dans le temps pour chacun desdits j signaux entrelacés, les j sommes de carrés des corrélations ainsi formées au cours d'une période de modulation étant comparées à un seuil, le dépassement de ce seuil indiquant en même temps l'acquisition de la synchronisation de trame, la correction de fréquence à apporter à la porteuse locale et la position optimale des instants d'échantillonnage à utiliser pour la transmission des données suivant l'acquisition de la synchronisation de trame.

La description suivante, en regard des dessins annexés, le tout donné à titre d'exemple, fera bien comprendre comment l'invention peut être réalisée.

La figure 1 est un schéma représentant la mise en œuvre du procédé de l'invention dans le récepteur d'un système de transmission de données.

La figure 2 illustre les différentes étapes du procédé de l'invention ; les diagrammes de la partie 2a montrent les fractions du mot de synchronisation utilisées et les diagrammes de la partie 2b représentent la quantité corrigée $E^*$ en fonction de l'écart de fréquence $\Delta f$.

La figure 3 représente des diagrammes en fonction du temps pour différents signaux et différentes grandeurs calculées au cours des étapes du procédé de l'invention.

La figure 4 est un schéma montrant un mode de réalisation d'un circuit déphaseur et d'un circuit de calcul de corrélations utilisés dans un récepteur mettant en œuvre le procédé de l'invention.

La figure 5 montre un mode de réalisation des circuits calculant des quantités E et leur valeur moyenne.

La figure 6 montre un mode de réalisation des circuits calculant la quantité corrigée $E^*$ et calculant un terme d'écart de fréquence $\Delta f$.

La figure 7 montre un mode de réalisation des circuits calculant la grandeur de la correction de fréquence $f_{VCO}$ et de la correction de phase $\varphi_{VCO}$.

3

La figure 8 est un schéma représentant, selon une variante différente de la figure 1, la mise en œuvre du procédé de l'invention dans le récepteur d'un système de transmission de données.

La figure 9 montre des diagrammes représentant en fonction du temps la corrélation complète entre le mot de synchronisation local et le signal reçu démodulé, ces diagrammes illustrant comment on obtient dans un récepteur les synchronisations de trame et d'horloge après la dernière étape du procédé de l'invention.

La figure 10 montre la configuration d'un récepteur, après sa synchronisation acquise à l'aide du procédé de l'invention.

La figure 11 représente des diagrammes complétant ceux de la figure 3 et montrant des signaux de commande utilisés pour mettre en œuvre le procédé de l'invention selon les schémas des figures 1 et 8.

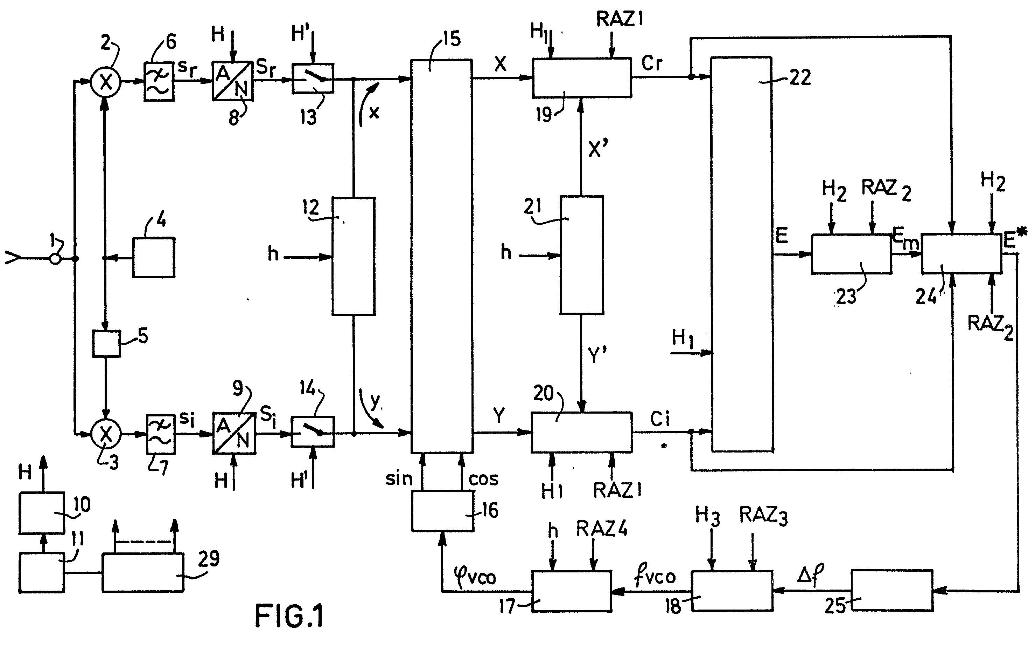

Sur la figure 1, on a représenté le schéma d'un récepteur d'un système de transmission de données dans lequel est mis en œuvre le procédé de correction de fréquence de l'invention. Dans l'émetteur distant non représenté, une porteuse est modulée en phase et/ou en amplitude ou en fréquence par le signal de données à transmettre, pour former le signal de porteuse modulé qui est transmis vers le récepteur, par une voie de largeur de bande limitée. La transmission est effectuée par exemple par voie radio.

Le signal modulé parvenant à l'entrée 1 du récepteur représenté sur la figure 1, est appliqué aux deux circuits mélangeurs 2 et 3 pour être démodulé par deux signaux de porteuse local déphasés de 90°. Au mélangeur 2 est appliqué le signal de porteuse locale en phase, fourni directement par le générateur de porteuse locale 4 et au mélangeur 3 est appliqué le signal de porteuse locale en quadrature déduit du générateur 4 par un circuit 5 déphaseur de 90°. Les deux filtres passe-bas 6 et 7 connectés à la sortie des mélangeurs 2 et 3 éliminent les composantes de fréquences situées au-dessus de la bande utilisée pour la transmission et fournissent respectivement des signaux démodulés en phase et en quadrature $s_r$ et $s_i$. Ces signaux $s_r$ et $s_i$ sont respectivement la composante réelle et la composante imaginaire d'un signal en bande de base qui est représentatif du signal de données ayant servi à moduler la porteuse dans l'émetteur distant. Les signaux $s_r$ et $s_i$ sont ensuite échantillonnés dans les circuits 8 et 9 avec une fréquence d'échantillonnage H que l'on suppose pour l'instant égale au rythme de modulation 1/H dans l'émetteur, T étant l'intervalle de modulation. La fréquence d'échantillonnage H est fournie par un générateur 10 d'horloge locale basse fréquence, déduite d'un générateur de rythme 11 de fréquence plus élevée. Si les traitements ultérieurs dans le récepteur sont effectués de façon numérique, ce qui est pratiquement le cas dans un récepteur utilisant le procédé de l'invention, les échantillons formés dans les circuits 8 et 9 y sont de plus convertis en numérique. La synchronisation du récepteur étant supposée acquise, les échantillons en phase $S_r$ et les échantillons en quadrature $S_i$ peuvent être appliqués directement (ou par l'intermédiaire d'un égaliseur) au circuit de décision du récepteur, ce circuit de décision non représenté, étant chargé de restituer les données.

Mais une restitution correcte des données implique en premier lieu une rigoureuse synchronisation en fréquence et en phase de la porteuse locale utilisée dans le récepteur pour la démodulation, sur la porteuse du signal reçu. Une valeur typique de la valeur maximale admissible pour la différence entre les fréquences de ces deux porteuses est de 1 Hz, ce qui, rapporté par exemple à une fréquence de porteuse radio de 30 MHz, correspond à une précision de $3 \cdot 10^{-8}$. Comme la fréquence de la porteuse reçue peut dériver d'une quantité bien supérieure à 1 Hz, pour diverses raisons telles que l'effet Doppler dans le cas de communications entre mobiles, il est nécessaire avant chaque communication de corriger la fréquence de la porteuse locale de démodulation pour que la différence entre les fréquences de cette porteuse locale et de la porteuse reçue ne dépasse pas la limite admissible.

Pour la restitution correcte des données, il est nécessaire également de synchroniser en fréquence et en phase le générateur 10 de l'horloge d'échantillonnage locale sur l'information d'horloge contenue dans le signal reçu, pour que l'échantillonnage des signaux $s_r$ et $s_i$ s'opère dans les circuits 8 et 9 avec la fréquence de modulation 1/T et avec la phase optimale.

Il est nécessaire enfin pour la restitution correcte des données d'opérer la synchronisation dite de trame qui permet de repérer le début de chaque communication. Cette synchronisation de trame est obtenue de façon classique, par la reconnaissance dans le récepteur d'un mot de synchronisation de trame émis avant chaque message de données. Cette reconnaissance peut s'effectuer en calculant la fonction de corrélation entre un mot de synchronisation de trame engendré localement dans le récepteur et les échantillons du signal reçu démodulé qui sont formés à l'aide des échantillons en phase et en quadrature $S_r$ et $S_i$. Pour l'acquisition rapide des synchronisations de porteuse et d'horloge locales, l'article précité de Meyers et Franks suggère d'agir simultanément sur les phases de la porteuse de démodulation et de l'horloge d'échantillonnage de façon à rendre maximale la fonction de corrélation calculée pour acquérir la synchronisation de trame.

La présente invention, tout en utilisant la séquence de synchronisation de trame, procède d'une autre manière et fournit un procédé de correction de fréquence de la porteuse locale se déroulant complètement au cours d'une période d'échantillonnage et permettant, à l'issue de cette période, l'acquisition de la synchronisation de la porteuse, de la synchronisation de trame et de la synchronisation de l'horloge d'échantillonnage.

Afin de décrire plus aisément le procédé de l'invention, on va d'abord expliquer les principes sur lesquels il est basé. Bien que ce procédé puisse s'appliquer à un système utilisant n'importe quel type

4

usuel de modulation, on va supposer pour simplifier les explications qu'il est appliqué dans un système de transmission utilisant la modulation de phase à deux états.

Dans ces conditions, le signal modulé, émis par l'émetteur distant peut s'écrire :

$$a(t) = A \sin \left( \omega t + \theta_K \cdot \frac{\Pi}{2} \right)$$

A est l'amplitude de la porteuse

$\omega$ est la pulsation de la porteuse

$\theta_K = \pm 1$ est un bit de données transmis pendant l'intervalle de temps t tel que $KT < t \leqslant (K + 1)T$, T étant la période de modulation et K entier caractérisant le temps.

La démodulation cohérente du signal reçu peut s'effectuer dans le récepteur par battement du signal reçu avec une porteuse locale ayant la même fréquence et la même phase que la porteuse du signal reçu. Cette opération de battement est effectuée dans le mélangeur 2 et, en supposant que le signal reçu a exactement la forme du signal émis a(t), elle correspond à l'expression :

$$a(t) \cdot \sin \left( \omega t + \frac{\Pi}{2} \right) = A \cdot \sin \left( \omega t + \theta_K \cdot \frac{\Pi}{2} \right) \cdot \sin \left( \omega t + \frac{\Pi}{2} \right) .$$

Après élimination par le filtre 6 de la composante à fréquence double du signal de battement, on obtient le signal démodulé

$$s_r = \frac{A}{2} \sin \frac{\Pi}{2} \theta_K$$

qui, pour les deux valeurs possibles $\pm 1$ de $\theta_K$, prend la forme :

$$s_r = \frac{A}{2} \theta_K .$$

Si la fréquence de la porteuse locale utilisée pour la démodulation diffère d'une quantité $\Delta f$ de la fréquence de la porteuse du signal reçu, le signal démodulé s'écrit :

$$s_r = \frac{A}{2} \theta_K . \cos (\Delta \omega . t) \qquad (1)$$

$\Delta \omega = 2\Pi \Delta f$, étant la différence de pulsations des deux porteuses.

Le signal démodulé est donc affecté d'une modulation d'amplitude, au rythme de l'écart de fréquence $\Delta f$. Cette modulation d'amplitude peut gravement perturber la restitution correcte des données dans le circuit de décision du récepteur.

La détection dans le récepteur du mot de synchronisation de trame émis avant chaque message de données est également affectée par une différence de fréquence entre la porteuse locale et la porteuse du signal reçu. Si le mot de synchronisation comporte n bits, cette détection s'effectue de façon usuelle en calculant la fonction de corrélation G entre une copie locale du mot de synchronisation et le signal démodulé.

On appelle $\theta(\ell)$ la suite des n bits du mot de synchronisation local ($\ell$ entier variant de 0 à $n - $), $\theta_K(\ell)$ une suite de n bits de données contenus dans le signal reçu ; la durée d'un bit étant la période T de modulation, la fonction de corrélation G s'écrit en utilisant la formule (1) :

$$G = \frac{1}{n} \sum_{\ell=0}^{n-1} \frac{A}{2} \cdot \theta_K(\ell) \cdot \cos (\ell \cdot \Delta \omega \cdot T) \cdot \theta(\ell) .$$

Quand il y a identité entre la suite $\theta_K(\ell)$ du signal reçu et la suite $\theta(\ell)$ du mot de synchronisation local, la fonction de corrélation G devient, en supposant pour simplifier le facteur d'amplitude A/2 égal à 1 :

$$G_m = \frac{1}{n} \sum_{\ell=0}^{n-1} \cos (\ell . \Delta \omega . T) .$$

On peut montrer que $G_m$ s'écrit :

5

$$G_m = \cos\left[\frac{(n-1).\Delta\omega.T}{2}\right] \cdot \frac{\sin\left(\frac{n\,\Delta\omega\,T}{2}\right)}{n \cdot \sin\left(\frac{\Delta\omega\,T}{2}\right)} \cdot \tag{2}$$

Ainsi la valeur $G_m$ prise par la fonction de corrélation G pour deux suites $\theta(\ell)$ et $\theta_K(\ell)$ identiques, n'est pas maximale et égale à 1, mais dépend de l'écart de fréquence entre les porteuses reçue et locale, ce qui peut perturber gravement la détection du mot de synchronisation. Ainsi, on déduit aisément de la formule (2) que la valeur $G_m$ de la fonction de corrélation s'annule pour des écarts de fréquence $\Delta f$ tels que :

$$\frac{n\,\Delta\omega\,T}{2} = k_1\,\Pi \quad \text{soit} \quad \Delta f = \frac{k_1}{nT} \quad (k_1 \text{ entier} \neq 0)$$

La détection correcte du mot de synchronisation nécessite donc que l'écart de fréquence $\Delta f$ soit plus petit que $1/nT$.

Le procédé de l'invention est destiné à corriger cet écart de fréquence $\Delta f$ pour permettre d'abord la détection correcte du mot de synchronisation de trame, puis la démodulation correcte des données transmises après l'acquisition de la synchronisation de trame. Ce procédé est basé sur une évaluation de l'écart de phase moyen dû à cet écart de fréquence et existant entre deux fractions égales et consécutives du mot de synchronisation. On se place d'abord dans le cas où ces deux fractions sont les deux moitiés du mot de synchronisation. Avec un mot de synchronisation de n bits, l'écart de phase entre les deux blocs formant les deux moitiés de ce mot est :

$$\Delta\varphi = N.\Delta\omega.T$$

$N = n/2$ étant le nombre de bits de chaque bloc.

Pour évaluer cet écart de phase $\Delta\varphi$, on utilise les échantillons en phase et en quadrature du signal reçu démodulé, et les échantillons en phase et en quadrature du mot de synchronisation local et l'on calcule 4 fonctions de corrélation que l'on appelle par la suite des corrélations partielles puisqu'elles portent chacune sur une fraction du mot de synchronisation :

— la corrélation partielle $C_r^1$ entre la première moitié des échantillons en phase du mot de synchronisation et une première suite de N échantillons du signal démodulé en phase ;

— la corrélation partielle $C_r^2$ entre la deuxième moitié des échantillons en phase du mot de synchronisation et une deuxième suite de N échantillons du signal démodulé en phase, cette deuxième suite étant consécutive à la première ;

— la corrélation partielle $C_i^1$ qui est analogue à la corrélation partielle $C_r^1$, mais utilise des échantillons en quadrature ;

— la corrélation partielle $C_i^2$ qui est analogue à la corrélation partielle $C_r^2$, mais utilise des échantillons en quadrature.

En posant $\Delta\varphi' = (N-1)\cdot\Delta\omega\cdot T$, on peut montrer que, lorsqu'il y a identité entre les échantillons du mot de synchronisation et du signal démodulé, les fonctions de corrélation $C_r^1$, $C_r^2$, $C_i^1$, $C_i^2$ prennent les valeurs :

$$(3)\left\{\begin{aligned}
C_r^1 &= \frac{1}{N}\sum_{\ell=0}^{N-1} \cos(\ell\,\Delta\omega\,T) = \cos\left(\frac{\Delta\varphi'}{2}\right)\frac{\sin\dfrac{\Delta\varphi}{2}}{N\sin\left(\dfrac{\Delta\varphi}{2N}\right)} \\[2em]
C_r^2 &= \frac{1}{N}\sum_{\ell=N}^{2N-1} \cos(\ell\,\Delta\omega\,T) = \cos\left(\Delta\varphi+\frac{\Delta\varphi'}{2}\right)\cdot\frac{\sin\dfrac{\Delta\varphi}{2}}{N\sin\left(\dfrac{\Delta\varphi}{2N}\right)} \\[2em]
C_i^1 &= \frac{1}{N}\sum_{\ell=0}^{N-1} \sin(\ell\,\Delta\omega\,T) = \sin\left(\frac{\Delta\varphi'}{2}\right)\frac{\sin\dfrac{\Delta\varphi}{2}}{N\sin\left(\dfrac{\Delta\varphi}{2N}\right)} \\[2em]
C_i^2 &= \frac{1}{N}\sum_{\ell=N}^{2N-1} \sin(\ell\,\Delta\omega\,T) = \sin\left(\Delta\varphi+\frac{\Delta\varphi'}{2}\right)\cdot\frac{\sin\dfrac{\Delta\varphi}{2}}{N\sin\left(\dfrac{\Delta\varphi}{2N}\right)} \cdot
\end{aligned}\right.$$

6

Pour des valeurs de $C_r^1$, $C_r^2$, $C_i^1$, $C_i^2$ données par les formules (3), la quantité $E = C_r^1 \cdot C_i^2 - C_r^2 \cdot C_i^1$ prend la valeur :

$$E = C_r^1 C_i^2 - C_r^2 C_i^1 = \sin(\Delta\varphi) \cdot \left[\frac{\sin\left(\dfrac{\Delta\varphi}{2}\right)}{N\sin\left(\dfrac{\Delta\varphi}{2N}\right)}\right]^2 .$$

Cette quantité E est souvent appelée par la suite « erreur » puisqu'elle représente l'écart de phase $\Delta\varphi$ et finalement l'écart de fréquence entre la porteuse reçue et la porteuse locale.

Comme les corrélations partielles dépendent du niveau du signal reçu, l'erreur E calculée de cette manière dépend aussi du niveau du signal reçu. Pour s'affranchir des variations possibles du niveau du signal reçu, on peut corriger l'erreur E en la divisant par un terme de correction égal à la somme des carrés des échantillons en phase et en quadrature du signal reçu démodulé. On obtient alors une erreur corrigée E* ne dépendant que de l'écart de phase $\Delta\varphi$ et telle que :

$$E^* = \sin(\Delta\varphi) \cdot \left[\frac{\sin\dfrac{\Delta\varphi}{2}}{N\sin\dfrac{\Delta\varphi}{2N}}\right]^2 . \tag{4}$$

Pour un écart de phase très faible par rapport à $\Pi/2$, le facteur

$$\left[\frac{\sin\dfrac{\Delta\varphi}{2}}{N\sin\dfrac{\Delta\varphi}{2N}}\right]^2$$

reste très voisin de 1 et l'erreur corrigée E* devient pratiquement égale à $\sin\Delta\varphi$.

Mais il est préférable d'effectuer la correction de l'erreur E en utilisant les corrélations partielles ($C_r^1$, $C_i^1$) ou ($C_r^2$, $C_i^2$) et en divisant cette erreur E par les quantités $(C_r^1)^2 + (C_i^1)^2$ ou $(C_r^2)^2 + (C_i^2)^2$. On peut voir aisément que ces quantités sont telles que :

$$(C_r^1)^2 + (C_i^1)^2 = (C_r^2)^2 + (C_i^2)^2 = \left[\frac{\sin\dfrac{\Delta\varphi}{2}}{N\sin\dfrac{\Delta\varphi}{2N}}\right]^2 \cdot k^2$$

k traduisant l'amplitude du signal reçu. Par conséquent en effectuant de cette manière la correction de l'erreur E, on obtient rigoureusement :

$$E^* = \sin\Delta\varphi .$$

L'écart de phase $\Delta\varphi$ étant déterminé d'une manière ou d'une autre à partir de l'erreur corrigée E*, il est possible de déterminer l'écart de fréquence $\Delta f$ ayant donné naissance à cet écart de phase, puisque $\Delta\varphi = N\,\Delta\omega\,T = N\,2\Pi\,\Delta f\,T$. Cet écart de fréquence $\Delta f$ mesuré peut être utilisé alors pour corriger la fréquence de la porteuse locale utilisée pour la démodulation.

Un procédé de correction de fréquence basé sur les corrélations sur deux moitiés du mot de synchronisation offre une certaine limitation en ce qui concerne le domaine de l'écart de fréquence $\Delta f$ mesurable. En effet, pour déterminer sans ambiguïté l'écart de phase $\Delta\varphi$ entre ces deux moitiés du mot de synchronisation, à partir de l'erreur corrigée E* que l'on peut supposer maintenant égale à $\sin\Delta\varphi$, il est nécessaire que $|\Delta\varphi| < \Pi/2$. Pour une cadence d'échantillonnage $1/T$ donnée, il en résulte que le dispositif envisagé ne peut mesurer et donc corriger que des écarts de fréquence inférieurs à une valeur maximale $\Delta f_{max}$ telle que :

$$N . 2\,\Pi\,\Delta f_{max}\,T = \frac{\Pi}{2}$$

soit

$$\Delta f_{max} = \frac{1}{4\,NT} .$$

On peut noter ici que l'on peut étendre la limitation de l'écart de fréquence $\Delta f$ mesurable, de telle sorte que $|\Delta\varphi| < \Pi$, si, en plus de $E = C_r^{\,1}C_i^{\,2} - C_r^{\,2}C_i^{\,1}$, on calculait la quantité $F = C_r^{\,1}C_r^{\,2} + C_i^{\,1}C_i^{\,2}$ qui, après avoir été corrigée de la même manière que E, donne la quantité corrigée $F^* = \cos\Delta\varphi$.

L'écart de fréquence maximal mesurable $\Delta f_{max}$ peut être insuffisant pour corriger l'écart de fréquence réel. Pour l'augmenter, il est clair que l'on peut diminuer la longueur des fractions de mot de synchronisation sur lesquelles portent les corrélations partielles. Pour doubler par exemple l'écart de fréquence maximal mesurable, on divise le mot de synchronisation de longueur n = 2N en 4 fractions égales de longueur N' = N/2. Dans ce cas, le procédé de correction de fréquence effectuant les corrélations partielles sur des fractions de longueur N' peut mesurer un écart de fréquence allant jusqu'à $\Delta f'_{max}$ tel que :

$$\Delta f'_{max} = \frac{1}{4\,N'\,T} = \frac{2}{4\,NT} = 2\,\Delta f_{max}\,.$$

En divisant le mot de synchronisation en fractions de longueur encore plus petite, on augmente encore la plage d'écarts de fréquence mesurables. Mais il est clair toutefois que cette augmentation de plage se fait au détriment de la précision de mesure de l'écart de fréquence, cette précision variant comme la longueur des fractions utilisées pour la mesure.

Pour pallier cet inconvénient, l'invention préconise d'opérer en plusieurs étapes pendant chacune desquelles un écart de fréquence est mesuré en utilisant des fractions du mot de synchronisation d'une longueur déterminée et à l'issue de laquelle une correction de fréquence correspondant à l'écart mesuré est effectuée. Dans la succession des étapes les mesures sont effectuées avec des fractions de longueur croissante de sorte que la plage d'écarts de fréquence mesurables diminue. Mais puisque des corrections de fréquence sont faites à l'issue de chaque étape avant d'effectuer la mesure suivante, les écarts de fréquence à mesurer dans la succession des étapes diminuent également, tandis que la précision de la mesure augmente.

Toutes les formules données ci-dessus pour déterminer l'écart de fréquence $\Delta f$ à partir de corrélations partielles portant sur deux moitiés du mot de synchronisation s'étendent aisément à une étape quelconque où l'on utilise des corrélations partielles portant sur des fractions consécutives de longueur quelconque du mot de synchronisation.

Ainsi, si $(k-1)$ et k sont l'ordre de deux fractions consécutives de même longueur du mot de synchronisation, on détermine les corrélations partielles en phase $C_r(k-1)$, $C_r(k)$ et les corrélations partielles en quadrature $C_i(k-1)$, $C_i(k)$.

A partir de ces corrélations partielles on peut calculer une erreur E d'après l'expression :

$$E = C_r(k-1)\,C_i(k) - C_i(k-1)\,C_r(k)\,. \tag{5}$$

L'erreur E corrigée en fonction du niveau du signal reçu vaut :

$$E^* = \sin(\Delta\varphi)\left[\frac{\sin\dfrac{\Delta\varphi}{2}}{b\sin\dfrac{\Delta\varphi}{2\,b}}\right]^2 \tag{6}$$

où $\Delta\varphi$ est l'écart de phase entre les deux fractions du mot de synchronisation et b le nombre de bits de chacune de ces fractions.

Pour de faibles valeurs de l'écart de phase $\Delta\varphi$ ou en faisant une correction utilisant la somme des carrés des corrélations partielles, comme on l'a expliqué ci-dessus, l'erreur E corrigée vaut pratiquement :

$$E^* = \sin(\Delta\varphi)\,. \tag{7}$$

Lorsque le nombre de fractions du mot de synchronisation utilisées au cours d'une étape est plus élevé que 2, il est avantageux, pour améliorer la précision de la mesure d'écart de fréquence, de calculer plusieurs erreurs E, d'en prendre la valeur moyenne $E_m$ et de calculer l'erreur corrigée $E^*$ à partir de cette valeur moyenne $E_m$.

A partir de la formule (6) ou pratiquement à partir de la formule (7), on peut obtenir l'écart de phase $\Delta\varphi$. L'écart de fréquence $\Delta\varphi$ ayant donné lieu à cet écart de phase $\Delta\varphi$ pour deux fractions de b bits peut être obtenu à l'aide de la relation :

$$\Delta\varphi = b\,.\,\Delta\omega\,.\,T = b\,.\,2\,\Pi\,\Delta f\,T\,. \tag{8}$$

Dans un processus à P étapes, on détermine donc à l'issue de chaque étape d'ordre p un écart de fréquence $\Delta f_p$, puis la somme

$$\sum_{i=1}^{p} \Delta f_i$$

qui constitue une certaine estimation pour cette étape de la grandeur de correction de fréquence à apporter à la porteuse locale. Cette somme formée à l'issue de la dernière étape d'ordre P est la valeur à retenir pour cette correction de fréquence, lors de la transmission de données suivant l'acquisition de la synchronisation de trame.

Pour déterminer la longueur et le découpage du mot de synchronisation qui sont nécessaires pour un processus de correction de fréquence à plusieurs étapes, on doit tenir compte de deux contraintes :
— l'écart maximal de fréquence à mesurer,
— la précision requise sur la mesure d'écart de fréquence.

L'écart maximal de fréquence impose la longueur maximale des plus petites fractions du mot de synchronisation utilisées dans la première étape où la mesure d'écart de fréquence est la moins précise. La précision finale requise détermine la longueur minimale des deux fractions utilisées dans la dernière étape. Un processus à P étapes peut être mis en œuvre en découpant le mot de synchronisation de n bits en fractions élémentaires dont le nombre de bits est respectivement :

$$\frac{n}{2^P}, \frac{n}{2^{P-1}}, ...., \frac{n}{2^2}, \frac{n}{2}.$$

Les deux contraintes précitées seront respectées si les plus petites fractions de $n/2^P$ bits permettent effectivement de mesurer l'écart de fréquence initial imposé et si les deux plus grandes fractions de $n/2$ bits donnent à la mesure toute la précision requise.

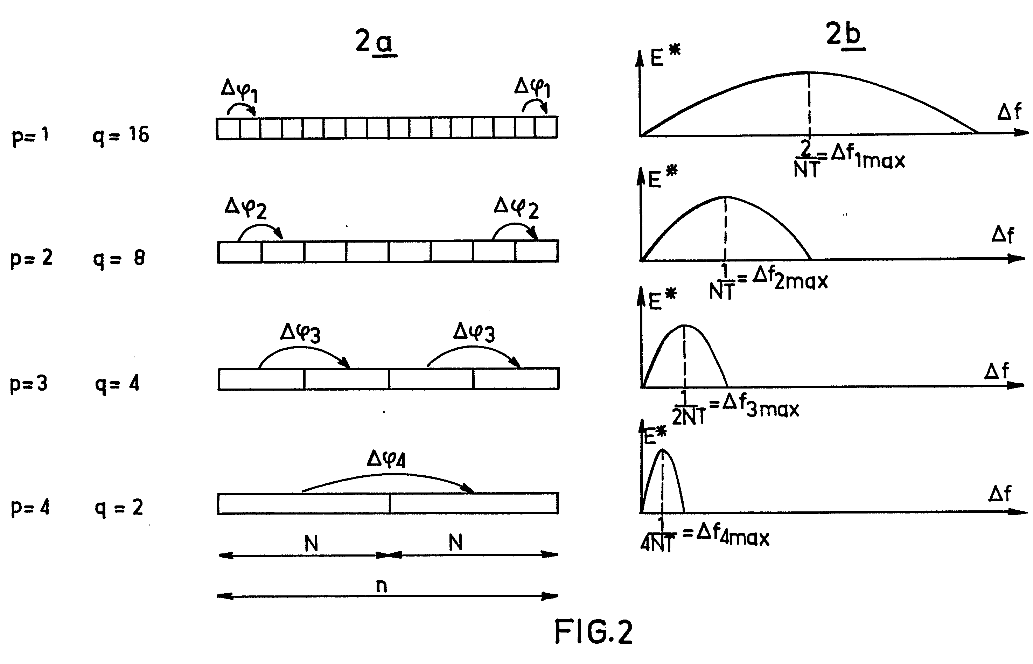

La figure 2 représente des diagrammes destinés à illustrer le procédé de l'invention lorsque celui-ci se déroule par exemple en 4 étapes. Dans la partie 2a de la figure, on a représenté pour chaque étape d'ordre p = 1, 2, 3 et 4, le mot de synchronisation à n = 2N bits divisé en q fractions de même longueur dans chaque étape. Dans la partie 2b on a représenté pour chaque étape 1, 2, 3 ou 4 la courbe de l'erreur corrigée $E^* = \sin\Delta\varphi$, en fonction de l'écart de fréquence $\Delta f$.

Dans l'étape 1, le mot de synchronisation divisé en $q = 2^4 = 16$ fractions ayant chacune une longueur de n/16 bits. On peut ainsi calculer 16 corrélations partielles en phase et en quadrature, former 15 erreurs E dont on prend la moyenne et déterminer enfin une erreur corrigée $E^*$ qui est pratiquement telle que $E^* = \sin(\Delta\varphi_1)$, $\Delta\varphi_1$ étant l'écart de phase moyen entre deux fractions. On peut en déduire l'écart de phase $\Delta\varphi_1$, puis l'écart de fréquence $\Delta f_1$ par la relation

$$\Delta\varphi_1 = \frac{\Pi N \Delta f_1 T}{4}.$$

Sur la partie 2b de la figure, la courbe de l'erreur corrigée $E^*$ en fonction de $\Delta f_1$ a la forme d'une arche de sinusoïde. Sa partie utile représentée en traits gras est limitée à la valeur maximale $\Delta f_{1max}$ de l'écart de fréquence $\Delta f_1$, pour laquelle l'écart de phase $\Delta\varphi_1 = \Pi/2$. On peut voir aisément que $\Delta f_{1max} = 2/NT$. A la fin de cette étape 1, la fréquence de la porteuse locale est corrigée de l'écart de fréquence $\Delta f_1$ mesuré, ce qui se traduit par une correction sur la phase du signal démodulé à corréler avec les fractions du mot de synchronisation utilisées dans l'étape 2 suivante.

Dans l'étape 2, le mot de synchronisation est divisé en $q = 2^3 = 8$ fractions ayant chacune une longueur de n/8 bits. Entre deux fractions consécutives il existe encore un écart de phase $\Delta\varphi_2$ dû à l'estimation imparfaite de l'écart de fréquence lors de l'étape 1. Mais on s'arrange pour que ce déphasage $\Delta\varphi_2$ soit inférieur à $\Pi/2$, de sorte que l'écart de fréquence restant $\Delta f_2$ est inférieur à l'écart maximal de fréquence $\Delta f_{2max}$ qui est la moitié de l'écart maximal $\Delta f_{1max}$, soit $\Delta f_{2max} = 1/NT$ (voir partie 2b de la figure). Dans cette étape 2 on peut faire une estimation de l'écart de fréquence $\Delta f_2$ en calculant 7 erreurs E dont on prend la valeur moyenne. A la fin de l'étape 2, l'écart de fréquence $\Delta f_2$ mesuré est pris en compte pour corriger la phase du signal démodulé à corréler avec des fractions du mot de synchronisation dans l'étape 3 suivante.

Dans l'étape 3, le mot de synchronisation est divisé en $q = 2^2 = 4$ fractions ayant chacune une longueur de n/4 bits et entre lesquelles subsiste un écart de phase $\Delta\varphi_3$. L'écart de fréquence maximal mesurable est $\Delta f_{3max} = 1/2NT$. L'estimation de l'écart de fréquence $\Delta f_3$ peut se faire en calculant 3 erreurs E dont on prend la valeur moyenne.

A la fin de cette étape, l'écart de fréquence mesuré $\Delta f_3$ est pris en compte pour corriger la phase du signal démodulé à corréler avec des fractions du mot de synchronisation dans l'étape 4 suivante.

Dans l'étape 4 le mot de synchronisation est divisé en q = 2 moitiés ayant chacune une longueur de N = n/2 bits et entre lesquelles subsiste l'écart de phase $\Delta\varphi_4$. L'écart de fréquence maximal mesurable est $\Delta f_{4max} = 1/4NT$. L'écart de fréquence $\Delta f_4$ est mesuré en calculant l'erreur E à partir des deux moitiés du mot de synchronisation. A la fin de cette étape 4 l'écart de fréquence mesuré peut être pris en compte pour corriger la phase du signal démodulé qui, dans une étape ultérieure ne faisant pas partie du processus de correction de fréquence proprement dit, peut être corrélé avec la totalité du mot de

synchronisation, dans le but d'acquérir la synchronisation de trame et éventuellement d'horloge d'échantillonnage, comme on l'expliquera par la suite.

A l'issue de la dernière étape 4 du processus de correction de fréquence proprement dit, la correction de fréquence de la porteuse locale à retenir est la somme des 4 écarts de fréquence mesurés soit $\Delta f_1 + \Delta f_2 + \Delta f_3 + \Delta f_4$. Cette correction de fréquence est utilisée effectivement pour la démodulation du signal reçu, lorsque la synchronisation de trame est acquise.

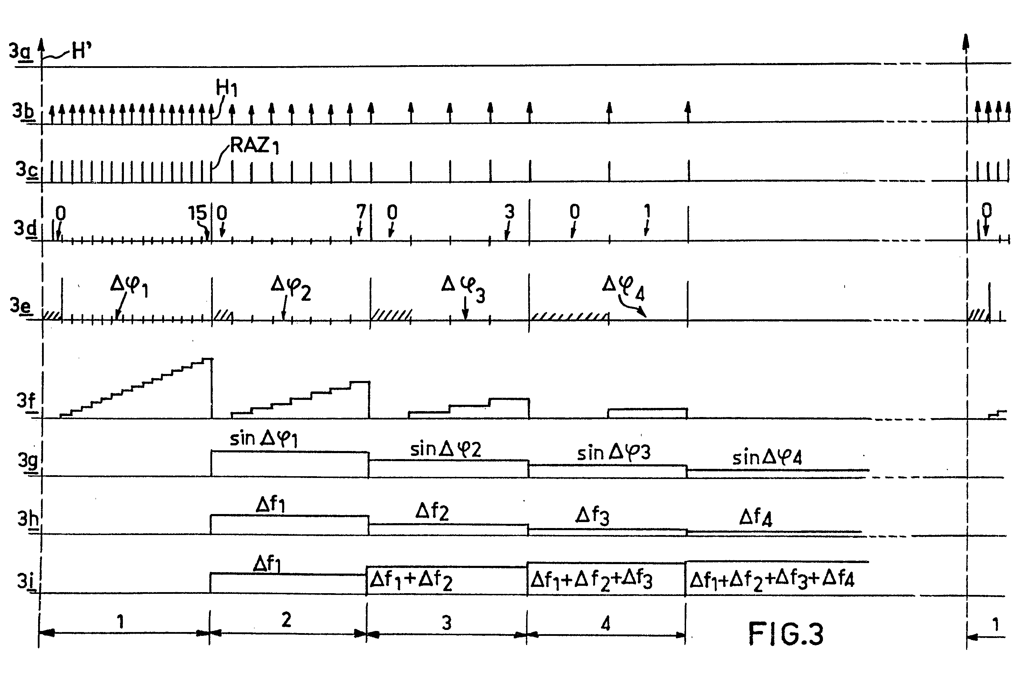

On va maintenant décrire la constitution d'un dispositif mettant en œuvre le procédé de l'invention à l'aide de la figure 1 et son fonctionnement dans le cas d'un processus à 4 étapes à l'aide de la figure 3.

Selon la figure 1, le dispositif de correction de fréquence comporte une mémoire 12 qui peut être connectée à la sortie des circuits 8 et 9 par l'intermédiaire des circuits portes 13 et 14 représentés sous forme de contacts. Ces circuits portes sont commandés par un signal H' fourni par le circuit de séquencement 29 pour emmagasiner dans la mémoire 12 chaque paire d'échantillons $S_r$ et $S_i$ fournis par les circuits 8 et 9. Le circuit de séquencement 29 reçoit des impulsions de la base de temps 11 et fournit tous les autres signaux de commande nécessaires au fonctionnement du dispositif. La mémoire 12 est dimensionnée pour emmagasiner des paires d'échantillons $S_r$ et $S_i$ en nombre égal au nombre n de bits du mot de synchronisation. Ces échantillons emmagasinés $S_r$, $S_i$ peuvent être analogiques ou numériques selon la technologie utilisée dans le dispositif. Le diagramme 3a sur la figure 3 représente deux impulsions consécutives du signal H' qui sont séparées par la période T de l'échantillonnage effectué dans les circuits 8 et 9. On suppose pour l'instant que cette période est la même que la période T de modulation.

Tout le processus de correction de fréquence de la porteuse locale doit complètement s'effectuer pendant cette période T, après l'entrée de chaque nouvelle paire d'échantillons dans la mémoire 12. Pour cela la mémoire 12 reçoit un signal d'horloge de lecture rapide h et ayant une fréquence suffisante pour que, pendant la période T, il apparaisse aux deux sorties de la mémoire autant de séquences de n échantillons $S_r$ et de n échantillons $S_i$ qu'il est nécessaire pour le déroulement complet du processus.

Les signaux x et y apparaissant aux deux sorties de la mémoire 12 sont les composantes réelle et imaginaire d'un signal complexe z. Ils sont appliqués à un dispositif de rotation de phase 15 dont le rôle est de faire tourner la phase de chaque échantillon dans chaque séquence de n échantillons du signal complexe z, d'un angle de phase $\varphi_{VCO}$, correspondant à la correction de fréquence $f_{VCO}$ formée par le dispositif de correction de fréquence à l'issue de chaque étape. Le dispositif 15 fournit les composantes réelle et imaginaire X et Y d'un signal complexe Z, en effectuant le calcul :

$$\begin{cases} X = x \cos \varphi_{VCO} + y \sin \varphi_{VCO} \\ Y = y \cos \varphi_{VCO} - x \sin \varphi_{VCO} \end{cases} \qquad (9)$$

Les quantités $\sin \varphi_{VCO}$ et $\cos \varphi_{VCO}$ utilisées dans le circuit 15 proviennent d'une mémoire morte 16 qui est adressée par la phase $\varphi_{VCO}$ fournie par le générateur de phase 17 au rythme de l'horloge rapide h. Le générateur 17 élabore la phase $\varphi_{VCO}$, à partir de la correction de fréquence $f_{VCO}$ fournie par le générateur de correction de fréquence 18.

Les échantillons des signaux X et Y sont appliqués aux circuits de calcul de corrélation 19 et 20 auxquels sont appliqués également des échantillons des composantes réelle et imaginaire X' et Y' du mot de synchronisation local. Les n échantillons de chaque séquence de X' et Y' sont stockés dans la mémoire morte 21 et lus au rythme de l'horloge rapide h, chaque séquence étant reproduite autant de fois qu'il est nécessaire pour le déroulement complet du processus. Pour un système de transmission utilisant la modulation de phase et d'amplitude, les n échantillons X' et Y' reproduisent les états de phase $\theta_K$ et les états d'amplitude correspondant aux n bits du mot de synchronisation émis ; pour une modulation de phase seulement (type PSK), les n échantillons X' et Y' sont simplement $\cos \theta_K$ et $\sin \theta_K$.

Dans les circuits de calcul de corrélation 19 et 20 est effectuée une accumulation de produits des échantillons X, X' d'une part et Y, Y' d'autre part. Le signal d'échantillonnage $H_1$ montré sur le diagramme 3b commande la lecture, dans les circuits 19 et 20 des résultats des corrélations partielles, tandis que le signal de remise à zéro $RAZ_1$ montré sur le diagramme 3c remet à zéro les résultats des corrélations partielles immédiatement après leur lecture par le signal $H_1$. La période des signaux $H_1$ et $RAZ_1$ définit la longueur des fractions de mot de synchronisation utilisées pour le calcul des corrélations partielles. Comme le montre la figure 3, cette période est différente selon que le processus se trouve dans les étapes 1, 2, 3 ou 4.

Les circuits de calcul 19 et 20 fournissent respectivement les résultats de corrélation partielle $C_r(k)$ et $C_i(k)$, k définissant l'ordre de chaque corrélation partielle dans chaque étape. Le diagramme 3d montre que pendant l'étape 1 sont fournis 16 résultats $C_r(k)$, $C_i(k)$ numérotés de 0 à 15, pendant l'étape 2 sont fournis 8 résultats numérotés de 0 à 7, pendant l'étape 3 sont fournis 4 résultats numérotés de 0 à 3 et pendant l'étape 4 sont fournis 2 résultats $C_r(k)$ et $C_i(k)$ numérotés 0 à 1.

Les résultats successifs des corrélations partielles sont appliqués au circuit de calcul 22 qui, à partir des paires de corrélations partielles consécutives $C_r(k-1)$, $C_r(k)$ et $C_i(k-1)$, $C_i(k)$ engendrées au rythme de $H_1$, calcule des termes d'erreur E, suivant l'expression (5) ci-dessus.

Chaque terme d'erreur E dépend de l'écart de phase $\Delta\varphi$ entre les deux fractions consécutives du mot de synchronisation utilisées pour fournir les corrélations partielles $C_r(k)$, $C_i(k)$ et $C_r(k-1)$, $C_i(k-1)$. Comme le montre le diagramme 3e les termes d'erreur calculés correspondent à des écarts de phase $\Delta\varphi_1$ pendant l'étape 1, $\Delta\varphi_2$ pendant l'étape 2, $\Delta\varphi_3$ pendant l'étape 3 et enfin à un écart de phase $\Delta\varphi_4$ pendant l'étape 4.

Les termes d'erreur E successifs ainsi calculés prenant 15 valeurs $E_1$ au cours de l'étape 1, 7 valeurs $E_2$ au cours de l'étape 2, 3 valeurs $E_3$ au cours de l'étape 3 et une valeur $E_4$ au cours de l'étape 4, sont appliqués au circuit 23 dans lequel on en prend la moyenne à l'issue des étapes 1, 2, 3 et 4. Pour cela, comme le montre le diagramme 3f, on procède dans le circuit 23 à une accumulation des erreurs E avec une remise à zéro des résultats de l'accumulation à la fin de chaque étape. Cette remise à zéro est commandée par un signal $RAZ_2$. Les résultats d'accumulation juste avant cette remise à zéro sont divisés par le nombre $N_m$ des termes d'erreur accumulés ($N_m = 15$ ; 7, 3 ou 1) de sorte que le résultat de cette division constitue la valeur moyenne des termes d'erreur. Les termes d'erreurs moyens $E_{1m}$, $E_{2m}$, $E_{3m}$, $E4_m = E_4$, apparaissent respectivement à l'issue des étapes 1, 2, 3, 4 sous la commande d'un signal d'échantillonnage $H_2$.

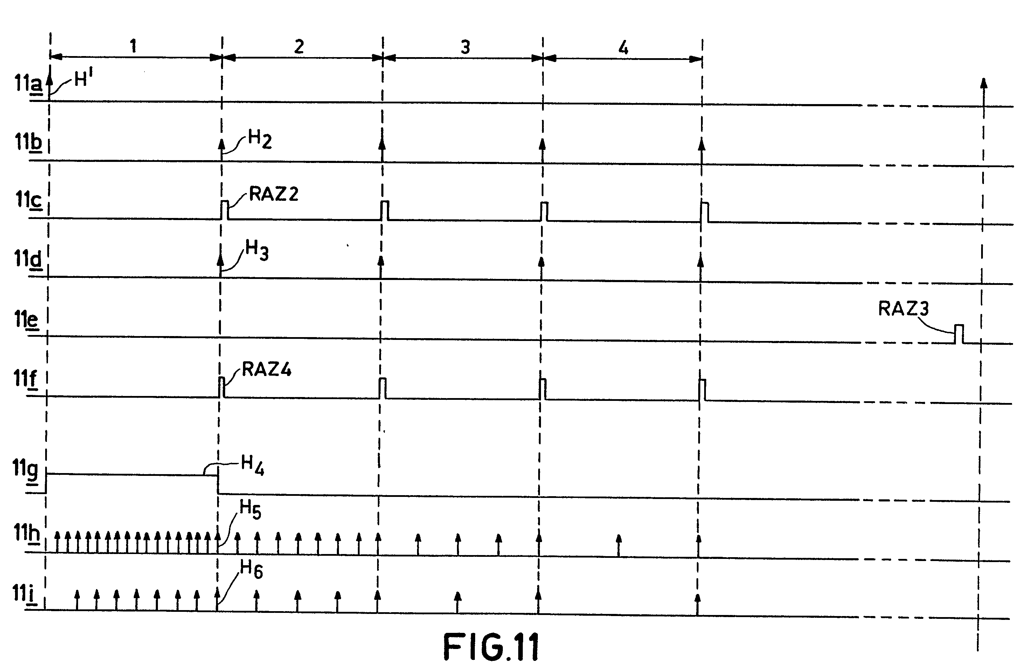

Sur la figure 11 destinée à compléter la figure 3, sont représentés différents signaux de commande utilisés dans le dispositif de l'invention. Le diagramme 11a destiné à fixer l'échelle des temps, représente comme le diagramme 3a deux impulsions consécutives du signal H', qui sont séparées par la période d'échantillonnage T. Ce diagramme 11a montre également les périodes de temps pendant lesquelles se déroulent les étapes 1, 2, 3 et 4. Les diagrammes 11b et 11c représentent respectivement les impulsions du signal d'échantillonnage $H_2$ et du signal de remise à zéro $RAZ_2$, ces signaux appliqués au circuit 23 exerçant les fonctions décrites ci-dessus au moyen d'impulsions se produisant à la fin des étapes 1, 2, 3 et 4.

Les termes d'erreur moyens engendrés dans le circuit 23 sont appliqués au circuit 24 pour être corrigés en niveau, de façon à obtenir des termes d'erreur corrigés $E^*_1$, $E^*_2$, $E^*_3$, $E^*_4$ égaux pratiquement à $\sin\Delta\varphi_1$, $\sin\Delta\varphi_2$, $\sin\Delta\varphi_3$, $\sin\Delta\varphi_4$. Le diagramme 3g montre que ces quantités apparaissent successivement à l'issue des étapes 1, 2, 3 et 4.

Pour cette correction de niveau, on peut avantageusement accumuler les sommes des carrés des résultats des corrélations partielles fournis par les circuits 19 et 20, en remettant à zéro par le signal $RAZ_2$ le résultat de l'accumulation à la fin de chaque étape. Les termes d'erreur corrigés en niveau s'obtiennent en divisant les termes d'erreur moyens calculés dans le circuit 23 par les résultats d'accumulation formés comme on vient de l'expliquer dans le circuit 24. Les erreurs corrigées apparaissent à la sortie du circuit 24 sous la commande du signal d'échantillonnage $H_2$.

Les erreurs corrigées $E^*$ sont appliquées au circuit 25 dont le rôle est de déterminer l'écart de fréquence mesuré à l'issue de chaque étape. Pour cela, ce circuit comporte d'abord des moyens pour déterminer les écarts de phase $\Delta\varphi$ en fonction des erreurs corrigées $E^*$. On peut utiliser pour cela une mémoire morte dans laquelle sont stockées les quantités $\Delta\varphi = \text{arc } \sin E^*$, la lecture de cette mémoire étant réalisée par des adresses constituées par les termes $E^*$. On peut obtenir également les écarts de phase par calcul, en utilisant des approximations simples de la fonction $\Delta\varphi = \text{arc } \sin E^*$. A partir des écarts de phase $\Delta\varphi_1$, $\Delta\varphi_2$, $\Delta\varphi_3$, $\Delta\varphi_4$ déterminés pour chaque étape, le circuit 25 détermine les écarts de fréquence correspondants $\Delta f_1$, $\Delta f_2$, $\Delta f_3$, $\Delta f_4$ en utilisant la relation (8) ci-dessus. Pour l'application de cette formule, le nombre de bits b à prendre en considération pour les étapes 1, 2, 3 et 4, est respectivement n/16, n/8, n/4, n/2, n étant le nombre de bits total du mot de synchronisation. Le diagramme 3h montre les intervalles de temps suivant les étapes 1, 2, 3 et 4, pendant lesquels sont acquis les écarts de fréquence $\Delta f_1$, $\Delta f_2$, $\Delta f_3$, $\Delta f_4$.

Ces écarts de fréquences mesurés sont appliqués au circuit 18 dans lequel ils sont accumulés au cours de chaque période T, le résultat de l'accumulation étant remis à zéro à la fin de chaque période T par un signal de remise à zéro $RAZ_3$ représenté sur le diagramme 11e. A l'issue de chaque étape le résultat de l'accumulation est lu à l'aide du signal d'échantillonnage $H_3$ représenté sur le diagramme 11d. Le circuit 18 joue ainsi le rôle d'un générateur fournissant une fréquence $f_{VCO}$ égale à la correction de fréquence de la porteuse locale à utiliser dans chaque étape du processus. Comme le montre le diagramme 3i cette fréquence

$f_{VCO}$ est successivement :

$f_{VCO} = 0$ à l'issue d'une période T, pendant l'étape 1

$f_{VCO} = \Delta f_1$ à l'issue de l'étape 1, pendant l'étape 2

$f_{VCO} = \Delta f_1 + \Delta f_2$ à l'issue de l'étape 2, pendant l'étape 3

$f_{VCO} = \Delta f_1 + \Delta f_2 + \Delta f_3$ à l'issue de l'étape 3, pendant l'étape 4

$f_{VCO} = \Delta f_1 + \Delta f_2 + \Delta f_3 + \Delta f_4$ à l'issue de l'étape 4 jusqu'à la fin de la période T.

La fréquence $f_{VCO}$ fournie par le circuit 18 est appliquée au circuit 17 qui fournit, au rythme de l'horloge rapide h (servant à la lecture des échantillons x et y dans la mémoire 12), la rotation de phase $\varphi_{VCO}$ à appliquer aux échantillons complexes de composantes x et y. En correspondance avec les fréquences $f_{VCO}$ indiquées ci-dessus et sur le diagramme 3i, cette rotation de phase est nulle pendant l'étape 1, puis après chacune des étapes 1, 2, 3 et 4 croît à partir de zéro proportionnellement à $\Delta f_1$, $\Delta f_1 + \Delta f_2$, $\Delta f_1 + \Delta f_2 + \Delta f_3$, $\Delta f_1 + \Delta f_2 + \Delta f_3 + \Delta f_4$. Le signal $RAZ_4$ appliqué au circuit 17 permet la remise à zéro convenable de $\varphi_{VCO}$, à l'issue de chaque étape 1, 2, 3, 4. Ce signal $RAZ_4$ est représenté sur le diagramme 11f.

11

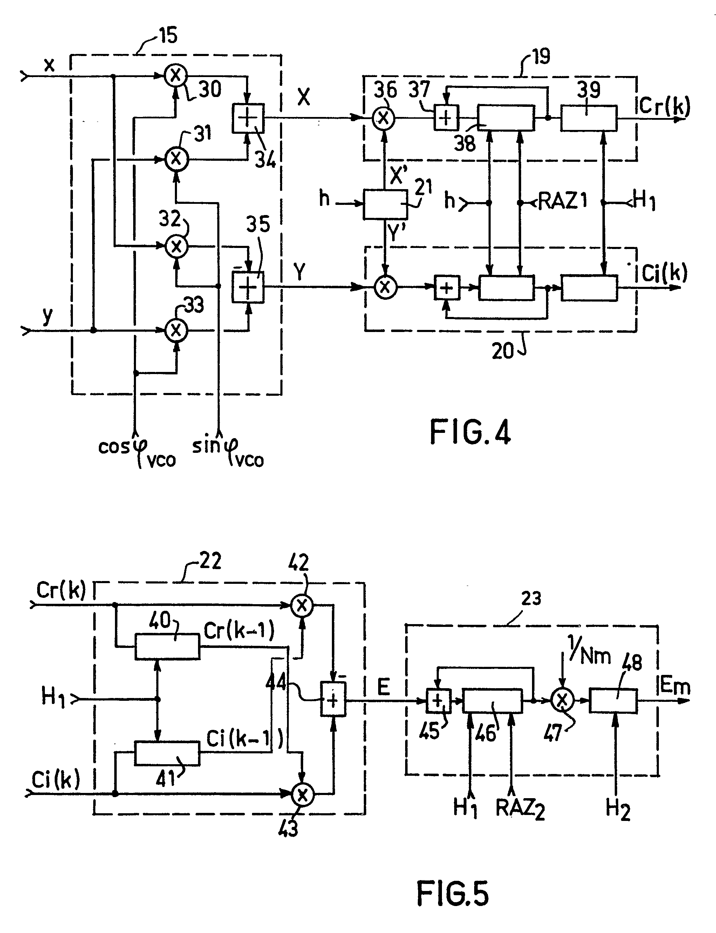

Les figures 4 à 7 représentent des modes de réalisation possibles pour les principaux circuits représentés sur la figure 1. Les circuits et les signaux ayant les mêmes fonctions portent les mêmes références sur ces figures.

La figure 4 montre un mode de réalisation du dispositif de rotation de phase 15 et des circuits de calcul de corrélation 19 et 20. Le dispositif 15 comporte les circuits multiplicateurs 30 à 33 et les circuits de combinaison 34 et 35 agencés entre eux pour calculer les signaux X et Y à partir des signaux x et y et des quantités $\cos \varphi_{VCO}$ et $\sin \varphi_{VCO}$, selon les formules (9) indiquées ci-dessus. Les circuits de calcul de corrélation 19 et 20 sont identiques et fonctionnent de la même manière. Le circuit 19, par exemple, comporte un circuit multiplicateur 36 qui forme le produit des échantillons X fournis par le circuit 15 et des échantillons X' provenant de la mémoire morte 21. Ces produits sont accumulés dans l'accumulateur formé par le circuit additionneur 37 et la mémoire 38, le résultat de l'accumulation apparaissant dans la mémoire tampon 39 connectée à la sortie de l'accumulateur. L'accumulation s'effectue au rythme de l'horloge h avec lequel apparaissent les échantillons X et X'. L'accumulateur est remis à zéro par le signal de remise à zéro $RAZ_1$, juste après que le résultat de l'accumulation ait été échantillonné dans la mémoire 39 par le signal d'échantillonnage $H_1$. Le résultat des corrélations partielles $C_r(k)$ apparaît à la sortie de la mémoire 39.

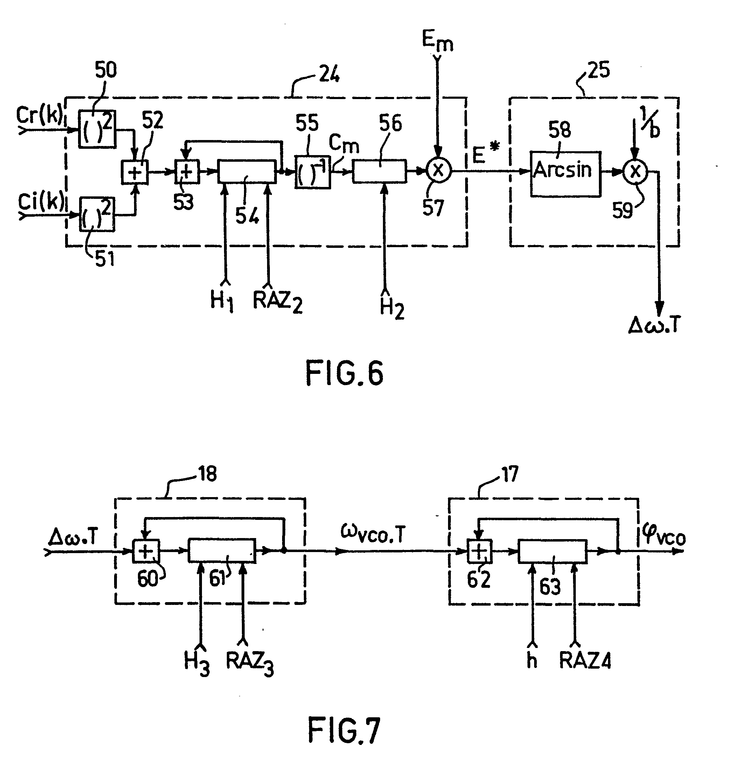

La figure 5 montre un mode de réalisation du circuit de calcul 22 de l'erreur E et du circuit de calcul 23 de l'erreur moyenne $E_m$. Le circuit 22 reçoit les résultats des corrélations partielles $C_r(k)$ et $C_i(k)$. Il comporte les mémoires 40 et 41 qui emmagasinent les résultats précédents $C_r(k-1)$ et $C_i(k-1)$ et qui, sous la commande du signal d'échantillonnage $H_1$, restituent les résultats de corrélations $C_r(k-1)$ et $C_i(k-1)$ en même temps qu'apparaissent les résultats de corrélations $C_r(k)$ et $C_i(k)$. Tous ces résultats de corrélations sont traités à l'aide des circuits multiplicateurs 42, 43 et du circuit de combinaison 44, agencés de façon à calculer le signal d'erreur E selon la formule (5) indiquée ci-dessus.

Le circuit de calcul de moyenne 23 comporte d'abord un accumulateur qui est formé du circuit additionneur 45 et de la mémoire 46, qui accumule les termes d'erreur E appliqués à son entrée sous la commande du signal d'échantillonnage $H_1$. L'accumulateur est remis à zéro par le signal $RAZ_2$ à la fin de chaque étape. Le résultat de l'accumulation, juste avant la remise à zéro de l'accumulateur est multiplié dans le circuit multiplicateur 47 par la quantité $1/N_m$, $N_m$ étant le nombre de termes d'erreur accumulés dans chaque étape. Le résultat de la multiplication est fourni à la mémoire 48 qui est lue par le signal d'échantillonnage de l'erreur moyenne $H_2$, de telle façon que les termes d'erreur moyenne de chaque étape apparaissent juste après la fin de chaque étape.

La figure 6 représente des modes de réalisation des circuits 24 et 25. Le circuit 24 qui a pour rôle de corriger l'erreur moyenne $E_m$ à partir des résultats de corrélations partielles $C_r(k)$ et $C_i(k)$ comporte les circuits d'élévation au carré 50 et 51 et le circuit additionneur 52 agencés pour fournir la quantité

$$[C_r(k)]^2 + [C_i(k)]^2.$$

Les quantités

$$[C_r(k)^2 + C_i(k)^2]$$

sont accumulées dans l'accumulateur formé par le circuit additionneur 53 et la mémoire 54. L'accumulation est effectuée au rythme du signal d'échantillonnage des corrélations partielles $H_1$ ; à la fin de chaque étape, la mémoire 54 est remise à zéro par le signal de commande $RAZ_2$. La sortie de l'accumulateur est connectée au circuit 55 qui forme la valeur inverse du contenu de l'accumulateur ; cette valeur inverse constitue le facteur de correction $C_m$ à appliquer au terme d'erreur moyenne $E_m$. Le facteur $C_m$ est fourni à la mémoire tampon 56, d'où il en est extrait par le signal de commande $H_2$ pour être appliqué au circuit multiplicateur 57 qui reçoit également l'erreur moyenne $E_m$ lue dans la mémoire 48 par le même signal de commande $H_2$. Le circuit 57 fournit ainsi le terme d'erreur corrigée E*.

Le circuit 25 qui a pour rôle de fournir l'écart de fréquence calculé à l'issue de chaque étape, comporte par exemple une mémoire morte 58 dans laquelle sont lus les écarts de phase $\Delta\varphi$ à des adresses constituées par les erreurs corrigées E*. Les quantités $\Delta\omega T$ sont obtenues conformément à la formule (8) au moyen du circuit multiplicateur 59 qui, à partir des écarts de phase $\Delta\varphi$ et de l'inverse du nombre de bits b des fractions du mot de synchronisation, forme les produits

$$\Delta\varphi \cdot \frac{1}{b} = \Delta\omega \cdot T.$$

Puisque les quantités $\Delta\omega \cdot T$ sont proportionnelles aux écarts de fréquence $\Delta f$, il n'est pas nécessaire de calculer ces derniers.

La figure 7 montre des modes de réalisation des circuits 18 et 17. Le circuit 18 comporte un accumulateur qui est constitué par le circuit additionneur 60 et la mémoire 61 et qui accumule sous la commande du signal d'échantillonnage $H_3$ les quantités $\Delta\omega T$ formées à l'issue des étapes du processus. La mémoire 61 est remise à zéro par le signal $RAZ_3$ à la fin de chaque période T de sorte que son contenu est nul au début de la période suivante. La sortie de l'accumulateur du circuit 18 produit ainsi la quantité $\omega_{VCO}T$ proportionnelle à la correction de fréquence $f_{VCO}$.

Le circuit 17 comporte un accumulateur qui est constitué par le circuit additionneur 62 et la mémoire 63 et qui accumule les quantités $\omega_{VCO}T$ au rythme de l'horloge rapide h. La mémoire 63 est remise à zéro par le signal $RAZ_4$ à la fin de chaque étape. Comme l'horloge h fournit également le rythme de lecture des échantillons x et y dans la mémoire 12, la sortie de l'accumulateur simule la rotation de phase $\varphi_{VCO}$ à appliquer aux échantillons complexes de composantes x et y pour compenser l'écart de fréquence de la porteuse locale par rapport à la porteuse reçue.

Selon une variante de l'invention que l'on va maintenant décrire, on peut utiliser au cours de chaque période d'échantillonnage T, un processus plus rapide en temps d'exécution que celui qui est illustré par le schéma de la figure 1. Selon cette variante appliquée par exemple au processus à 4 étapes décrit jusqu'à présent, les corrélations partielles pour les étapes 2, 3, 4 sont déterminées à partir des corrélations partielles calculées durant la première étape, qui restent formées à partir des n paires d'échantillons x et y lus dans la mémoire 12 et des n paires d'échantillons X' et Y' lus dans la mémoire 21. On évite alors de relire dans chaque étape, 2, 3, 4, ces n paires d'échantillons dans les mémoires 12 et 21.

La méthode utilisée pour obtenir les corrélations partielles pour les étapes 2, 3, 4 consiste à ajouter deux à deux les corrélations partielles calculées respectivement lors des étapes précédentes 1, 2, 3. Mais avant de faire cette addition, il faut au préalable effectuer la correction de phase des corrélations partielles calculées lors des phases précédentes, en utilisant l'écart de fréquence qui vient d'être estimé.

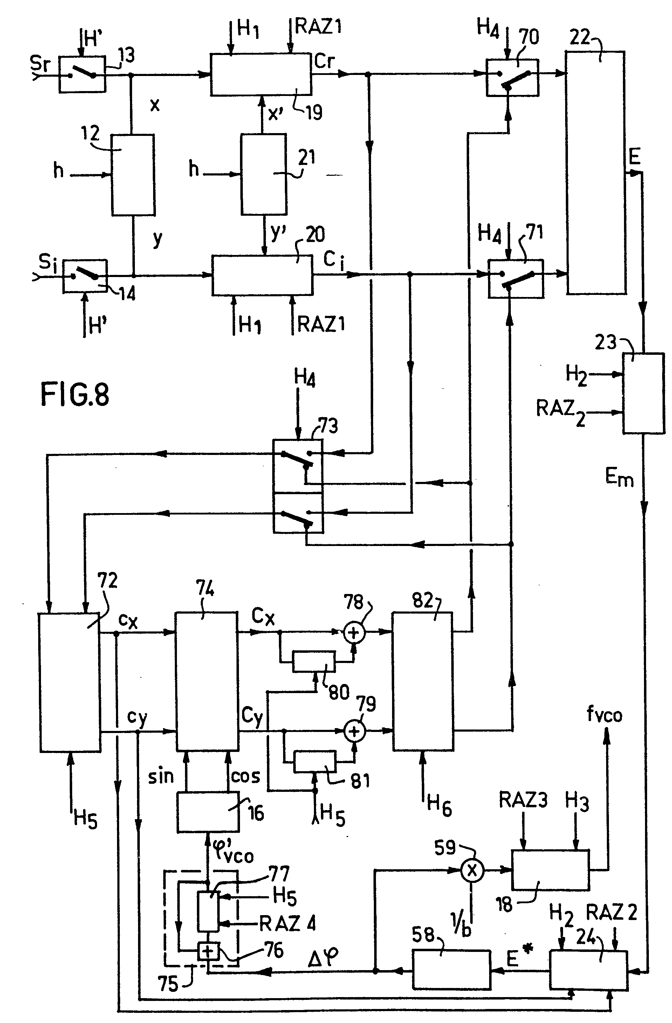

Le schéma de la figure 8 montre comment cette variante du procédé de l'invention peut être mise en œuvre, tandis que pour son fonctionnement on peut utiliser les diagrammes déjà décrits des figures 3 et 11, complétés par les diagrammes 11g, 11h et 11i de la figure 11.

Sur le schéma de la figure 8, les éléments ayant les mêmes fonctions que sur la figure 1 sont munis des mêmes références. On y a représenté la mémoire 12 qui, comme on l'a expliqué, reçoit à chaque période T une paire d'échantillons $S_r$, $S_i$ via les portes 13 et 14, et qui a une capacité de n paires d'échantillons. Les échantillons x, y lus dans la mémoire 12 au rythme de l'horloge rapide h sont appliqués directement aux circuits de calcul de corrélation 19 et 20, en même temps que les n paires d'échantillons X', Y' du mot de synchronisation local, qui sont lus également au rythme de l'horloge h. On peut utiliser pour le calcul des corrélations partielles dans les circuits 19 et 20, les signaux de commande $H_1$ et $RAZ_1$ identiques à ceux utilisés sur le schéma de la figure 1 et représentés sur les diagrammes 3b et 3c. Mais en fait, dans la suite du schéma on n'utilise parmi les corrélations partielles élaborées par les circuits 19 et 20 que celles élaborées au cours de l'étape 1. A cet effet, la sortie des circuits 19 et 20 est connectée au circuit 22 de calcul de l'erreur E, seulement pendant l'étape 1, grâce aux circuits commutateurs 70 et 71 établis dans la position convenable par le signal de commande $H_4$ représenté sur le diagramme 11g. La sortie des circuits 19 et 20 est également connectée aux entrées de la mémoire 72, par l'intermédiaire du circuit commutateur 73 commandé également par le signal de commande $H_4$, de façon que la mémoire 72 emmagasine les corrélations partielles élaborées pendant l'étape 1.

Les corrélations partielles élaborées au cours de l'étape 1 servent à calculer, comme on l'a expliqué pour la variante de la figure 1, les erreurs $E_1$ dans le circuit 22, puis l'erreur moyenne $E_{1m}$ dans le circuit 23. Les 16 corrélations partielles calculées pendant l'étape 1 et stockées dans la mémoire 72, y sont lues au cours de l'étape 2 par le signal de commande $H_5$ représenté sur le diagramme 11h. Elles sont utilisées dans le circuit de correction 24 ayant la même fonction que celui de la figure 1, pour corriger l'erreur moyenne $E_{1m}$ qui apparaît également pendant l'étape 2. L'erreur corrigée $E^*_1$ est appliquée au circuit 58 qui détermine l'écart de phase $\Delta\varphi_1$ correspondant aux corrélations partielles élaborées pendant l'étape 1, en utilisant la relation $\Delta\varphi_1 = \arcsin E^*_1$. Les 16 paires de corrélations partielles de l'étape 1, lues dans la mémoire 72 sont appliquées également au circuit de rotation de phase 74 pour être corrigées par la phase $\varphi'_{VCO}$. En appelant $c_x$ et $c_y$ les paires de corrélations partielles entrant dans le circuit de rotation de phase 74, ce dernier fournit des trains de corrélations partielles corrigées en phase $C_x$ et $C_y$ en effectuant les calculs :

$$C_x = c_x \cos \varphi'_{VCO} + c_y \sin \varphi'_{VCO}$$

$$C_y = c_y \cos \varphi'_{VCO} - c_x \sin \varphi'_{VCO}\,.$$

Les quantités $\sin \varphi'_{VCO}$ et $\cos \varphi'_{VCO}$ sont lues dans la mémoire morte 16 au moyen de la phase $\varphi'_{VCO}$ élaborée par le générateur de phase 75. Ce dernier est constitué par un accumulateur qui est formé par le circuit additionneur 76 et la mémoire 77, qui accumule, au rythme du signal de commande $H_5$, les écarts de phase $\Delta\varphi$ fournis par le circuit 58 et qui est remis à zéro par le signal $RAZ_4$ à la fin de chaque étape. De cette manière les 16 paires de corrélations partielles appliquées au cours de l'étape 2 au circuit de rotation de phase 74, y sont corrigées en phase par la phase $\varphi'_{VCO1}$ constituée par l'accumulation de l'écart de phase $\Delta\varphi_1$.

Chaque paire des 16 corrélations partielles corrigées par la phase $\varphi'_{VCO1}$ est appliquée aux circuits additionneurs 78, 79 pour y être ajoutée à la paire de corrélations partielles précédente extraite des mémoires 80 et 81 à l'aide du signal de commande $H_5$. Les sommes fournies à la sortie des circuits 78 et 79 sont écrites dans la mémoire 82 par le signal de commande $H_6$ qui est représenté sur le diagramme 11i et qui a un rythme moitié du signal de commande $H_5$, de sorte que cette mémoire 82 emmagasine les 8 paires de corrélations partielles élaborées pendant l'étape 2, à partir des 16 paires de corrélations partielles de l'étape 1.

Ces 8 paires de corrélations partielles de l'étape 2 sont lues dans la mémoire 82 au rythme du signal de commande $H_6$ et sont appliquées d'une part, via les circuits commutateurs 70 et 71, au circuit 22 qui calcule les 8 erreurs $E_2$ de l'étape 2 et d'autre part, via le circuit commutateur 73, à la mémoire 72 pour y être emmagasinées jusqu'à leur prochaine lecture par le signal de commande $H_5$ au cours de l'étape 3.

Au cours de l'étape 3, se reproduit le processus déjà décrit pour l'étape 2 : calcul de l'erreur moyenne $E_{2m}$, de l'erreur corrigée $E^*_2$, de l'écart de phase $\Delta\varphi_2$, de la phase $\varphi'_{VCO2}$ qui sert à corriger en phase les 8 corrélations partielles lues dans la mémoire 72, et enfin calcul des sommes deux à deux des corrélations partielles corrigées ; quatre de ces sommes sont écrites dans la mémoire 82 et sont utilisées de la même manière.

Au cours de l'étape 4, est aussi déterminé l'écart de phase $\Delta\varphi_3$ et la phase $\varphi'_{VCO3}$ servant à corriger en phase les 4 corrélations partielles lues dans la mémoire 72. Finalement lors de cette étape 4 sont écrites dans la mémoire 82 deux paires de corrélations partielles corrigées en phase.

Ces deux paires de corrélations partielles permettent de déterminer, à l'issue de l'étape 4, l'écart de phase $\Delta\varphi_4$. Cet écart de phase $\Delta\varphi_4$ peut être utilisé pour calculer la phase $\varphi'_{VCO4}$ servant à corriger en phase les deux corrélations partielles lues dans la mémoire 72 et former dans la mémoire 82 une corrélation complète, corrigée en phase, entre le mot de synchronisation local et le signal reçu démodulé. Comme on l'a déjà indiqué, cette corrélation complète peut être utilisée pour la synchronisation d'horloge d'échantillonnage et la synchronisation de trame.

On peut remarquer que dans le dispositif de la figure 8, les phases $\varphi'_{VCO1}$, $\varphi'_{VCO2}$, $\varphi'_{VCO3}$, $\varphi'_{VCO4}$ servant à corriger en phase les corrélations partielles de chaque étape 1, 2, 3 et 4 sont obtenues directement à partir des écarts de phase calculés $\Delta\varphi_1$, $\Delta\varphi_2$, $\Delta\varphi_3$, $\Delta\varphi_4$, alors que dans le dispositif de la figure 1, les phases servant à corriger les échantillons lus dans la mémoire 12 sont obtenues à partir des écarts de fréquence cumulés, soient $\Delta f_1$, $\Delta f_1 + \Delta f_2$, $\Delta f_1 + \Delta f_2 + \Delta f_3$, $\Delta f_1 + \Delta f_2 + \Delta f_3 + \Delta f_4$. Comme dans les deux dispositifs, on a toutefois besoin de l'écart de fréquence cumulé total, $\Delta f_1 + \Delta f_2 + \Delta f_3 + \Delta f_4$, qui constitue la fréquence $f_{VCO}$ servant à corriger la porteuse locale à l'issue du processus, le dispositif de la figure 8 doit être muni de moyens pour élaborer cette fréquence $f_{VCO}$. Pour cela, les écarts de phase $\Delta\varphi$ fournis par le circuit 58 sont traités comme on l'a expliqué à l'aide des figures 6 et 7. Les écarts de phase $\Delta\varphi = b \Delta\omega T$ sont appliqués au circuit multiplicateur 59 pour y être multipliés par 1/b. Les quantités $\Delta\omega T$ proportionnelles aux écarts de fréquence $\Delta f$, sont accumulées dans le circuit 18 qui fournit à l'issue de l'étape 4 la grandeur $\omega_{VCO}T$ proportionnelle à la correction de fréquence $f_{VCO}$.

On va maintenant décrire l'application du dispositif de recherche de fréquence de l'invention, à la recherche de la synchronisation de trame et de l'horloge d'échantillonnage. Pour cette application, on calcule, après la fin du processus de correction de fréquence, la corrélation complète entre les n échantillons du mot de synchronisation local et les n derniers échantillons du signal reçus, cette corrélation complète pouvant être obtenue, comme on l'a expliqué, aussi bien dans la forme de réalisation de la figure 1 que dans la forme de réalisation de la figure 8.

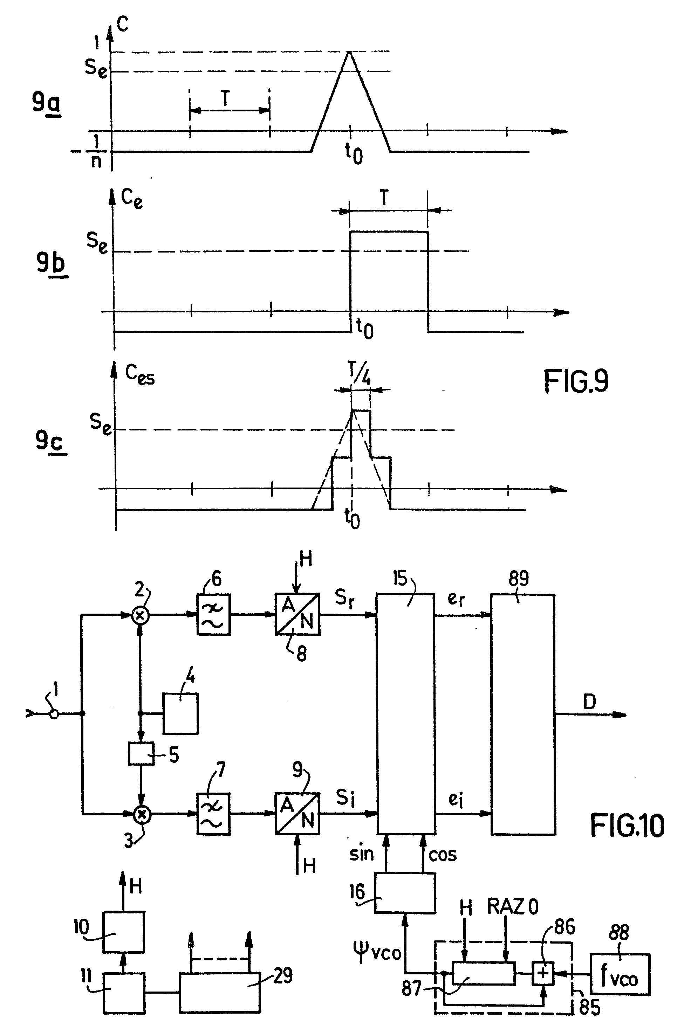

Le principe sur lequel est basée la recherche de la synchronisation de trame va être expliqué à l'aide des diagrammes 9a et 9b de la figure 9. Sur le diagramme 9a on a représenté en fonction du temps la fonction de corrélation C complète, déterminée de façon continue, en supposant que la synchronisation d'horloge est acquise. Dans ce cas, la fonction de corrélation C présente un pic, à l'un des instants de l'horloge d'échantillonnage de période T, indiqués par les graduations de l'axe des temps. La fonction C a la valeur 1 à l'instant $t_o$ de ce pic et la valeur $-1/n$, si par exemple le mot de synchronisation est une séquence dite de longueur maximale. L'instant $t_o$ du pic indique l'instant où les n précédents échantillons du signal reçu constituent le mot de synchronisation émis. Pour obtenir à peu près l'instant $t_o$ du pic de corrélation et acquérir ainsi la synchronisation de trame, il suffit de comparer la fonction de corrélation à un seuil $S_e$. Le diagramme 9b représente la corrélation complète $C_e$ déterminée à partir des signaux échantillonnés avec la période T de l'horloge d'échantillonnage, comme cela se produit effectivement dans le dispositif de l'invention. Comme on suppose sur le diagramme 9b que la synchronisation de l'horloge est acquise, on obtient rigoureusement l'instant $t_o$ du pic de corrélation en comparant à un seuil $S_e$ la corrélation $C_e$ obtenue à partir de signaux échantillonnés.

Lorsque la synchronisation de l'horloge bit n'est pas acquise, on peut l'acquérir en même temps que la synchronisation de trame, à condition de suréchantillonner le signal reçu avec une fréquence multiple de la fréquence de modulation 1/T. Si cette fréquence multiple est j/T, le dispositif de correction de fréquence peut être identique, mais travailler en répartition dans le temps sur j signaux échantillonnés avec la période T et entrelacés pour aboutir à la fin du processus de correction de fréquence à j valeurs de correction de fréquence $f_{VCO}$ et enfin à j corrélations complètes correspondant respectivement auxdits j signaux entrelacés. Le diagramme 9c montre la corrélation $C_{es}$ qui est l'image de la fonction de corrélation C du diagramme 9a et qui est obtenue avec une fréquence d'échantillonnage 4/T. En comparant la corrélation $C_{es}$ à un seuil $S_e$ on obtient la synchronisation de trame, tandis qu'en détectant l'emplacement, à l'intérieur de la période T, de l'échantillon qui conduit à la corrélation maximale, on obtient la synchronisation de l'horloge d'échantillonnage. En même temps, on sélectionne parmi les j corrections de fréquence $f_{VCO}$ disponibles, celle qui correspond à l'horloge d'échantillonnage obtenue et qui sera utilisée lors de la transmission de données suivant la période de synchronisation.

Les processus de recherche de synchronisation d'horloge d'échantillonnage et de trame que l'on vient d'expliquer peuvent être mis en œuvre en utilisant les moyens de calcul de corrélation des dispositifs des figures 1 et 8. Les composantes réelles et imaginaires $C_i$ et $C_r$ des corrélations complètes que l'on peut obtenir après le processus de recherche de fréquence sont par exemple appliquées à des circuits les élevant au carré, les quantités au carré obtenues sont appliquées à un circuit additionneur qui forme une somme qui est comparée à un seuil, l'instant de dépassement de ce seuil fournissant la synchronisation de trame et la synchronisation d'horloge d'échantillonnage.

Une fois que les synchronisations de porteuse, d'horloge d'échantillonnage et de trame ont été acquises, en utilisant le dispositif de l'invention, ce dernier n'est plus utile et le récepteur est mis dans une configuration montrée sur la figure 10 et lui permettant de restituer les données. Sur cette figure, on trouve une partie des éléments de la figure 1, munis des mêmes références. Le générateur 10 de l'horloge bit a été établi sur sa configuration lui permettant de fournir la fréquence 1/T avec la phase trouvée à l'issue de la période de synchronisation. Les échantillons $S_r$, $S_i$ fournis par les convertisseurs analogique-numérique 8 et 9, à cette fréquence 1/T, sont appliqués directement à un dispositif de rotation de phase qui peut être le même que celui utilisé dans le dispositif de correction de fréquence de l'invention. Dans le dispositif 15 de rotation de phase, les échantillons de composantes $S_r$, $S_i$ sont corrigés en phase, en utilisant des composantes sin $\Psi_{VCO}$ et cos $\Psi_{VCO}$ lues dans la mémoire 16 à l'aide de la phase $\Psi_{VCO}$ et élaborées dans le générateur de phase 85. Le dispositif 15 de rotation de phase fournit des échantillons $e_r$, $e_i$ résultant d'un calcul analogue à celui indiqué par les formules (9). La phase $\Psi_{VCO}$, différente de la phase $\varphi_{VCO}$ ou $\varphi'_{VCO}$, doit correspondre à la phase que présenterait, à des instants multiples de T à partir de l'instant initial $t_o$, un oscillateur ayant la fréquence $f_{VCO} = \Delta f_1 + \Delta f_2 + \Delta f_3 + \Delta f_4$ trouvée à l'issue de la période de synchronisation. Cette phase $\Psi_{VCO}$ est obtenue à l'aide d'un accumulateur, constitué par le circuit additionneur 86 et la mémoire 87. Dans la mémoire 87 la fréquence $f_{VCO}$ (ou une quantité proportionnelle) emmagasinée dans la mémoire 88, est accumulée avec la fréquence d'accumulation 1/T, à partir de l'instant initial $t_o$ déterminé par le signal $RAZ_0$. Les échantillons corrigés $e_r$, $e_i$ fournis par le circuit de rotation de phase 15 sont appliqués au circuit de décision 89 qui restitue les données D. Pendant la transmission des données, la fréquence $f_{VCO}$ pourrait en outre être commandée à l'aide d'une boucle d'asservissement permettant le maintien de la synchronisation de la porteuse et n'ayant aucun lien avec le dispositif de l'invention qui n'est utilisé que pour l'acquisition de cette synchronisation.

Dans tout ce qui précède on a décrit la mise en œuvre du procédé de l'invention comme si elle était réalisée à l'aide de circuits câblés. Mais il est clair que cette mise en œuvre sous ses différentes formes peut être aussi bien réalisée à l'aide d'un microprocesseur associé à des mémoires et commandé par un programme pour exécuter toutes les fonctions requises. Ces dernières ont été suffisamment expliquées pour que l'élaboration d'un tel programme soit à la portée de n'importe quel spécialiste de logiciel.

**Revendications**

1. Procédé de correction de fréquence destiné à corriger la fréquence de la porteuse locale dans le récepteur d'un système de transmission de données dans lequel les données sont transmises par modulation d'une porteuse et un mot de synchronisation du récepteur est transmis avant les données, ce récepteur comportant des moyens (2-7) pour démoduler le signal reçu à l'aide de signaux en phase et en quadrature avec une porteuse locale, des moyens (8, 9) pour échantillonner les signaux démodulés en phase et en quadrature avec une fréquence d'échantillonnage égale au rythme de modulation, chaque nouvelle paire $(S_r, S_i)$ d'échantillons en phase et en quadrature ainsi formés entrant dans une mémoire (12) pour signal reçu, le récepteur comportant enfin une mémoire (21) pour mot de synchronisation contenant les échantillons $(X', Y')$ en phase et en quadrature d'un mot de synchronisation local identique au mot de synchronisation émis, ce procédé étant caractérisé en ce que, pendant chaque période d'échantillonnage, il est effectué au moins une fois la lecture en synchronisme des n paires d'échantillons contenus dans la mémoire pour mot de synchronisation et des n dernières paires d'échantillons entrés dans la mémoire pour signal reçu, afin de déterminer en P étapes ($P \geqslant 1$) la grandeur de la correction de fréquence à apporter à la porteuse locale :

— pendant chaque étape, il est calculé à partir desdits échantillons lus, au moins une paire de corrélations partielles en phase $C_r(k - 1)$, $C_r(k)$ et au moins une paire de corrélations partielles en quadrature $C_i(k - 1)$, $C_i(k)$, les corrélations partielles d'ordre $(k - 1)$ et $(k)$ dans chaque étape utilisant deux fractions consécutives de même longueur du mot de synchronisation local, les corrélations partielles de l'étape d'ordre $p > 1$ utilisant des fractions du mot de synchronisation de longueur supérieure à celle des fractions utilisées pendant l'étape précédente d'ordre $p - 1$, les corrélations partielles de l'étape d'ordre p étant calculées en prenant en compte la correction de fréquence calculée à l'issue de l'étape précédente d'ordre $p - 1$ ;

— pendant chaque étape, il est calculé au moins une quantité

$$E = C_r(k - 1) . C_i(k) - C_i(k - 1) . C_r(k)$$

qui est corrigée en fonction du niveau du signal reçu de façon à fournir une quantité corrigée E* qui est une fonction déterminée

$$E^* = \sin \Delta\varphi \cdot \left[ \frac{\sin \dfrac{\Delta\varphi}{2}}{b \sin \dfrac{\Delta\varphi}{2\,b}} \right]^2$$

de l'écart de phase $\Delta\varphi$ produit par l'écart de fréquence $\Delta f$ entre la porteuse locale et la porteuse reçue, pendant un intervalle de temps correspondant au nombre de bits b formant la longueur desdites fractions du mot de synchronisation ;

— à l'issue de chaque étape d'ordre p $\geq$ 1, il est calculé à partir d'au moins une quantité corrigée E* formée au cours de l'étape et de la longueur commune des fractions du mot de synchronisation utilisée au cours de l'étape, l'écart de fréquence $\Delta f_p$, puis la somme

$$\sum_{i=1}^{p} \Delta f_i$$

qui constitue une estimation de la grandeur de la correction de fréquence, cette estimation à l'issue de l'étape d'ordre P étant la valeur finale à retenir pour la grandeur de la correction de fréquence à apporter à la porteuse locale.

2. Procédé de correction de fréquence selon la revendication 1, comportant au moins une étape pendant laquelle sont calculées plusieurs paires de corrélations partielles en phase et plusieurs paires de corrélations partielles en quadrature servant à calculer plusieurs quantités E, caractérisé en ce que à l'issue de cette étape il est calculé la valeur moyenne desdites quantités E, cette valeur moyenne étant corrigée en fonction du niveau du signal reçu pour former ladite valeur corrigée E* qui sert à calculer l'écart de fréquence $\Delta f_p$ à l'issue de chaque étape p.

3. Procédé de correction de fréquence selon l'une des revendications 1 et 2, caractérisé en ce que chaque quantité E calculée au cours d'une étape (ou la valeur moyenne des quantités E calculées au cours de l'étape) est corrigée en divisant ladite quantité E (ou ladite valeur moyenne) par un terme égal à la somme des carrés de la corrélation partielle en phase et de la corrélation partielle en quadrature ayant servi à calculer ladite quantité E (ou par un terme égal à la somme des carrés des corrélations partielles en phase et des corrélations partielles en quadrature ayant servi à calculer ladite valeur moyenne), de sorte que la quantité corrigée E* devient la fonction E* = $\sin \Delta\varphi$ de l'écart de phase $\Delta\varphi$, cette quantité E* servant à déterminer l'écart de fréquence $\Delta f_p$ à l'issue de chaque étape p.

4. Procédé de correction de fréquence selon l'une des revendications 1 à 3, caractérisé en ce que la longueur des fractions du mot de synchronisation utilisées pendant l'étape d'ordre P est la moitié de la longueur du mot de synchronisation, la longueur des fractions du mot de synchronisation utilisées pendant une étape d'ordre p (1 < p $\leq$ P) est le double de celle des fractions utilisées pendant l'étape d'ordre p − 1 et la longueur des fractions du mot de synchronisation utilisées pendant l'étape 1 est déterminée par la correction maximale de fréquence prévue.

5. Procédé de correction de fréquence selon l'une des revendications 1 à 4, caractérisé en ce que, pendant chaque période d'échantillonnage, il est effectué P fois la lecture en synchronisme des n paires d'échantillons contenues dans chacune desdites mémoires (12, 21), chaque lecture engendrant une étape pour la détermination de la grandeur de la correction de fréquence, la prise en compte de la correction de fréquence déterminée à l'issue de l'étape p − 1 pour le calcul des corrélations partielles de l'étape p étant obtenue en affectant les paires d'échantillons lus pour l'étape p dans la mémoire pour signal reçu, d'une correction de phase correspondant à la grandeur de la correction de fréquence

$$\sum_{i=1}^{p-1} \Delta f_i$$

déterminée à l'issue de l'étape p − 1, cette correction de phase étant nulle pour les paires d'échantillons lus pour l'étape 1.

6. Procédé de correction de fréquence selon l'une des revendications 1 à 4, caractérisé en ce que, pendant chaque période d'échantillonnage, il est effectué une fois la lecture en synchronisme des n paires d'échantillons contenus dans chacune desdites mémoires, cette lecture engendrant l'étape 1 pour la détermination de la grandeur de la correction de fréquence, les corrélations partielles de l'étape 1 étant calculées directement à partir desdits échantillons lus, chacune des corrélations partielles d'une étape p > 1 étant calculée en formant la somme de deux corrélations partielles d'ordre (k − 1) et (k) calculées au cours de l'étape précédente p − 1 et affectées d'une correction de phase correspondant à l'écart de fréquence $\Delta f_{p-1}$ déterminé à l'issue de l'étape p − 1.

7. Récepteur d'un système de transmission de données utilisant le procédé de correction de fréquence selon la revendication 5, caractérisé en ce qu'il comporte :

— des moyens d'horloge de lecture h commandés pour effectuer P fois la lecture en synchronisme des n paires d'échantillons en phase x et en quadrature y stockés dans la mémoire (12) pour signal reçu et des n paires d'échantillons en phase X' et en quadrature Y' stockés dans la mémoire (21) pour mot de synchronisation ;

— des moyens (15) de calcul pour former à partir de chaque paire d'échantillons x, y, les échantillons X, Y tels que

$$X = x \cos \varphi_{VCO} + y \sin \varphi_{VCO}$$

$$Y = y \cos \varphi_{VCO} - x \sin \varphi_{VCO}$$

$\varphi_{VCO}$ étant un terme de ladite correction de phase correspondant à ladite paire d'échantillons x, y ;

— des moyens (19, 20) de calcul pour former à partir des échantillons X, X' et Y, Y' une (ou plusieurs) paire(s) de corrélations partielles en phase et une (ou plusieurs) paire(s) de corrélations partielles en quadrature ;

— des moyens (22, 23) de calcul pour former à partir desdites corrélations partielles une quantité E ou la valeur moyenne de plusieurs quantités E ;

— des moyens (24) de calcul pour former une quantité E* égale à la valeur corrigée de la quantité E ou de la valeur moyenne de plusieurs quantités E ;

— des moyens pour déterminer un terme d'écart de phase $\Delta\varphi$, en utilisant, selon la correction effectuée, au moins l'une des relations :

$$E^* = \sin \Delta\varphi \cdot \left[\frac{\sin \dfrac{\Delta\varphi}{2}}{b \sin \dfrac{\Delta\varphi}{2\,b}}\right]^2 \; , \quad E^* = \sin \Delta\varphi$$

ou une approximation de ces relations ;

— des moyens pour diviser l'écart de phase $\Delta\varphi$ par un terme (b) indiquant la longueur des fractions de mot de synchronisation utilisées pendant l'étape considérée et obtenir ainsi un terme d'écart de fréquence $\Delta f$ ;

— des moyens (18) pour accumuler les termes d'écart de fréquence $\Delta f$ avec une remise à zéro $(RAZ_3)$ du contenu de l'accumulateur au début de chaque période d'échantillonnage, de façon à obtenir à l'issue de chaque étape p un terme de correction de fréquence $f_{VCO}$, et à l'issue de la dernière étape P, la correction de fréquence finale ;

— des moyens (17) enfin pour accumuler les termes de correction de fréquence $f_{VCO}$ avec un rythme d'accumulation égal au rythme de ladite horloge de lecture h et avec une remise à zéro $(RAZ_4)$ du contenu de l'accumulateur au début de chaque étape p, de façon à obtenir au rythme de l'horloge de lecture h les termes de correction de phase $\varphi_{VCO}$.

8. Récepteur d'un système de transmission de données utilisant le procédé de correction de fréquence selon la revendication 6, caractérisé en ce qu'il comporte :

— des moyens d'horloge de lecture h commandés pour effectuer une fois la lecture en synchronisme des n paires d'échantillons en phase x et en quadrature y stockés dans la mémoire (12) pour signal reçu et des n paires d'échantillons en phase X' et en quadrature Y' stockés dans la mémoire (21) pour mot de synchronisation ;

— des moyens (19, 20) de calcul pour former au cours de l'étape 1, à partir desdits échantillons lus x, X' et y, Y', une (ou plusieurs) paire(s) de corrélations partielles en phase et une (ou plusieurs) paire(s) de corrélations partielles en quadrature ;

— des premiers moyens de commutation (70, 71) pour diriger vers des moyens (22, 23) de calcul formant une quantité E ou la valeur moyenne de plusieurs quantités E, soit les corrélations partielles en phase et en quadrature formées au cours de l'étape 1, soit lesdites corrélations partielles formées au cours d'une étape $p > 1$ ;

— des deuxièmes moyens de commutation (73) pour diriger vers une mémoire (72) pour corrélations partielles, soit les corrélations partielles en phase et en quadrature formées au cours de l'étape 1, soit lesdites corrélations partielles formées au cours de chaque étape $p > 1$ ;

— des moyens pour former les corrélations partielles au cours de chaque étape $p > 1$ et comprenant :

a) des moyens d'horloge de lecture $H_5$ pour lire les corrélations partielles en phase $c_x$ et en quadrature $c_y$ stockées dans ladite mémoire (72) pour corrélations partielles, au rythme auquel elles sont entrées dans ladite mémoire ;

b) des moyens (74) de calcul pour former à partir de chaque paire de corrélations partielles $c_x$, $c_y$, les corrélations partielles $C_x$, $C_y$ telles que :

$$C_x = c_x \cos \varphi'_{VCO} + c_y \sin \varphi'_{VCO}$$

$$C_y = c_y \cos \varphi'_{VCO} - c_x \sin \varphi'_{VCO}$$

17

$\varphi'_{VCO}$ étant un terme de correction de phase correspondant à ladite paire de corrélations partielles $c_x$, $c_y$ ;

c) des moyens (78-82) pour former, avec un rythme $H_6$ moitié de ladite horloge $H_5$, les sommes de paires de corrélations partielles consécutives $C_x$ et les sommes de paires de corrélations partielles consécutives $C_y$, lesdites sommes constituant les corrélations partielles à utiliser au cours de l'étape suivante p + 1, qui sont dirigées, via les deuxièmes moyens de commutation (73), vers ladite mémoire (72) pour corrélations partielles et, via les premiers moyens de commutation (70, 71) vers lesdits moyens (22, 23) de calcul formant une quantité E ou la valeur moyenne de plusieurs quantités E ;

— des moyens (24) de calcul pour former une quantité E* égale à la valeur corrigée de la quantité E ou de la valeur moyenne de plusieurs quantités E ;

— des moyens (58) pour déterminer un terme d'écart de phase $\Delta\varphi$ en utilisant, selon la correction effectuée, au moins l'une des relations :

$$E^* = \sin \Delta\varphi \left[ \frac{\sin \dfrac{\Delta\varphi}{2}}{b \sin \dfrac{\Delta\varphi}{2\,b}} \right]^2 , \quad E^* = \sin \Delta\varphi$$

ou une approximation de ces relations ;

— des moyens (75) pour accumuler les termes d'écart de phase $\Delta\varphi$ avec un rythme d'accumulation égal au rythme de l'horloge de lecture $H_5$ des corrélations partielles dans ladite mémoire (72) pour corrélations partielles et avec une remise à zéro (RAZ$_4$) de l'accumulateur au début des étapes p ⩾ 1 de façon à obtenir à la sortie de l'accumulateur, au rythme de ladite horloge $H_5$ les termes de correction de phase $\varphi'_{VCO}$ ;

— des moyens (59) pour diviser les termes d'écart de phase $\Delta\varphi$ par un terme (b) indiquant la longueur des fractions de mot de synchronisation utlisées pendant l'étape considérée et obtenir ainsi un terme d'écart de fréquence $\Delta f$ ;

— des moyens (18) enfin pour accumuler les termes d'écart de fréquence $\Delta f$ avec une remise à zéro (RAZ$_3$) du contenu de l'accumulateur au début de chaque période d'échantillonnage, de façon à obtenir à l'issue de la dernière étape P la correction de fréquence à apporter à la porteuse locale.

9. Récepteur d'un système de transmission de données selon l'une des revendications 7 ou 8, caractérisé en ce que les moyens (19, 20) prévus dans le récepteur pour former les corrélations partielles jusqu'à la dernière étape P sont commandés en outre, en prenant en compte la correction de fréquence finale calculée à l'issue de l'étape P, pour former les corrélations complètes en phase et en quadrature portant sur la longueur totale du mot de synchronisation, des moyens étant prévus de plus pour former la somme des carrés desdites corrélations complètes en phase et en quadrature et pour comparer cette somme à un seuil (S$_e$), le dépassement de ce seuil indiquant en même temps l'acquisition de la synchronisation de trame et la correction de fréquence à apporter à la porteuse locale pour la transmission de données suivant cette acquisition de synchronisation de trame.

10. Récepteur d'un système de transmission de données selon la revendication 9, et dans lequel le signal reçu démodulé est échantillonné avec une fréquence d'échantillonnage j/T multiple du rythme de modulation 1/T, de façon à former j signaux échantillonnés avec la période T et entrelacés, caractérisé en ce que les moyens prévus dans le récepteur pour former la grandeur de la correction de fréquence, puis la somme des carrés des corrélations complètes en phase et en quadrature sont utilisés en répartition dans le temps pour chacun desdits j signaux entrelacés, les j sommes de carrés des corrélations ainsi formées au cours d'une période de modulation étant comparées à un seuil (S$_e$), le dépassement de ce seuil indiquant en même temps l'acquisition de la synchronisation de trame, la correction de fréquence à apporter à la porteuse locale et la position optimale des instants d'échantillonnage à utiliser pour la transmission des données suivant l'acquisition de la synchronisation de trame.

11. Récepteur selon l'une des revendications 7 à 10, caractérisé en ce que pour mettre en œuvre la correction de fréquence finale de la porteuse locale après l'acquisition de la synchronisation de trame, il est prévu une mémoire (88) pour stocker cette correction de fréquence finale, des moyens (85) pour accumuler ladite correction de fréquence finale avec un rythme égal à la fréquence d'échantillonnage 1/T, et fournir ainsi un terme de correction de phase $\Psi_{VCO}$, enfin des moyens (15) de calcul pour former à partir des échantillons du signal reçu $S_r$, $S_i$ les échantillons corrigés $e_r$, $e_i$ tels que :

$$e_r = S_r \cos \psi_{VCO} + S_i \sin \psi_{VCO}$$

$$e_i = S_i \cos \psi_{VCO} - S_r \sin \psi_{VCO} \,.$$

**Claims**

1. A frequency correction method for correcting the frequency of a local carrier in a receiver of a data transmission system in which data are transmitted by carrier modulation and a receiver synchronizing word is transmitted before the data, this receiver comprising means (2-7) for demodulating a received signal with the aid of signals in phase and in quadrature with a local carrier, means (8, 9) for sampling the in-phase and quadrature demodulated signals at a sampling frequency equal to the modulation rate, each new pair $(S_r, S_i)$ of in-phase and quadrature samples thus formed being written into a received-signal memory (12), the receiver further comprising a synchronizing-word memory (21) containing in-phase and quadrature samples $(X', Y')$ of a local synchronizing word which is identical to the transmitted synchronizing word, the method being characterized in that, during each sampling period, synchronized reading of the n pairs of samples contained in the synchronizing word memory and the n pairs of samples written last into the received-signal memory is effected at least once in order to determine in P steps $(P \geqslant 1)$ the magnitude of the frequency correction to be effected on the local carrier :

— during each step there are calculated from said read samples at least one pair of in-phase partial correlations $C_r(k - 1)$, $C_r(k)$ and at least one pair of quadrature partial correlations $C_i(k - 1)$, $C_i(k)$, the partial correlations of the order $(k - 1)$ and $(k)$ in each step employing two consecutive portions of the same length of the local synchronizing word, the partial correlations of the step of the order of $p > 1$ using portions of the synchronizing word of a length which exceeds the length of the portions used during the preceding step of the order $p - 1$, the partial correlations of the step of the order p being calculated while taking account of the frequency correction calculated at the end of the preceding step $p - 1$ ;

— during each step, there is calculated at least one quantity

$$E = C_r(k - 1) . C_i(k) - C_i(k - 1) . C_r(k)$$

which is corrected as a function of the level of the received signal so as to supply a corrected quantity $E^*$, which is a predetermined function

$$E^* = \sin \Delta\varphi \left[ \frac{\sin \dfrac{\Delta\varphi}{2}}{b \sin \dfrac{\Delta\varphi}{2b}} \right]^2$$

of the phase deviation $\Delta\varphi$ produced by the frequency deviation $\Delta f$ between the local carrier and the received carrier, during a time interval corresponding to the number of bits b which form the length of the said portions of the synchronizing word ;

— at the end of each step $p \geqslant 1$, there is calculated from at least one corrected quantity $E^*$, which is formed during the step and which is of the same length as the portions of the synchronizing word used during the step, the frequency deviation $\Delta f_p$, and thereafter the sum

$$\sum_{i=1}^{p} \Delta f_i,$$

which forms an estimate of the magnitude of the frequency correction, this estimate at the end of the step P being the final value to be retained for the magnitude of the frequency correction to be effected on the local carrier.

2. A frequency correction method as claimed in Claim 1, comprising at least one step during which several pairs of in-phase partial correlations and several pairs of quadrature partial correlations are calculated which are used to calculate several quantities E, characterized in that at the end of this step the mean value of the said quantities E is calculated, this mean value being corrected as a function of the level of the received signal for forming the said corrected value $E^*$ which is used to calculate the frequency deviation $\Delta f_p$ at the end of each step p.

3. A frequency correction method as claimed in any one of the Claims 1 and 2, characterized in that each quantity E calculated during a step (or the mean value of the quantities E calculated during the step) is corrected by dividing the said quantity E (or the said mean value) by a term equal to the sum of the squares of the in-phase parallel correlations and the quadrature partial correlations which were used to calculate the said quantity E (or by a term equal to the sum of the squares of the in-phase partial correlations and the quadrature partial correlations which were used to calculate the said mean value) so that the corrected quantity $E^*$ becomes the function $E^* = \sin\Delta\varphi$ of the phase deviation $\Delta\varphi$, this quantity $E^*$ being used to determine the frequency deviation $\Delta f_p$ at the end of each step p.

4. A frequency correction method as claimed in any one of the Claims 1 to 3, characterized in that the length of the synchronizing word portions used during the step of order P is half the length of the synchronizing word, the length of the synchronizing word portion used during a step of order p $(1 < p \leqslant P)$ is double the length of the portions used during the step of order $p - 1$ and the length of the synchronizing word portions used during step 1 is determined by the maximum frequency correction foreseen.

5. A frequency correction method as claimed in any one of the Claims 1 to 4, characterized in that, during each sampling period, synchronized reading of the n pairs of samples contained in each of the said memories (12, 21) is effected P times, each reading operation generating a step for the determination of the magnitude of the frequency correction, the account of the frequency correction determined at the end of the step p − 1 during the calculation of the partial correlations of the step p being taken by performing, on the pairs of samples read from the received-signal memory for the step p, a phase correction corresponding to the magnitude of the frequency correction

$$\sum_{i=1}^{p-1} \Delta f_i$$

determined at the end of step p − 1, this phase correction being zero for the pairs of samples read for step 1.

6. A frequency correction method as claimed in any one of the Claims 1 to 4, characterized in that, during each sampling period, synchronized reading of the n pairs of samples contained in each of the said memories is effected once, this reading operation generating step 1 for the determination of the magnitude of the frequency correction, the partial correlations of step 1 being calculated directly from the said read samples, each of the partial correlations of a step p > 1 being calculated by forming the sum of two partial correlations of the order (k − 1) and (k) calculated during the preceding step p − 1 and subjected to a phase correction corresponding to the frequency deviation $\Delta f_{p-1}$ determined at the end of step p − 1.

7. A receiver for a data transmission system using the frequency correction method as claimed in Claim 5, characterized in that it comprises :

— read clock means h controlled to effect P times synchronized reading of n pairs of in-phase samples x and quadrature samples y stored in the received-signal memory (12) and n pairs of in-phase samples X′ and quadrature samples Y′ stored in the synchronizing-word memory (21) ;

— calculating means (15) to form from each pair of samples x ; y, the samples X, Y such that

$$X = x \cos \varphi_{VCO} + y \sin \varphi_{VCO}$$

$$Y = y \cos \varphi_{VCO} - x \sin \varphi_{VCO}$$

$\varphi_{VCO}$ being a term of the said phase correction corresponding to the said pair of samples x, y ;

— calculating means (19, 20) to form from the samples X, X′ and Y, Y′ one (or several) pair(s) of in-phase partial correlations and one (or several) pair(s) of quadrature partial correlations ;

— calculating means (22, 23) to form from the said partial correlations a quantity E or the mean value of several quantities E ;

— calculating means (24) to form a quantity E* equal to the corrected value of the quantity E or the mean value of several quantities E ;

— means to determine a phase deviation term $\Delta\varphi$, by using in accordance with the correction effected, at least one of the relations :

$$E^* = \sin \Delta\varphi \left[ \frac{\sin \frac{\Delta\varphi}{2}}{b \sin \frac{\Delta\varphi}{2b}} \right]^2 , \quad E^* = \sin \Delta\varphi$$

or an approximation of these relations :

— means to divide the phase deviation $\Delta\varphi$ by a term (b) which indicates the length of the portions of the synchronizing word used during the step under consideration and to obtain thus a frequency deviation term $\Delta f$ ;

— means (18) to accumulate the phase deviation terms $\Delta f$, the contents of the accumulator being reset to zero (RAZ$_3$) at the beginning of each sampling period in order to obtain at the end of each step p a frequency correction term $f_{VCO}$, and at the end of the last step P the final frequency correction ; and

— means (17) to accumulate the frequency correction term $f_{VCO}$ at an accumulation rate which is equal to the rate of the said read clock h, the contents of the accumulator being reset to zero (RAZ$_4$) at the beginning of each step p, in order to obtain the phase correction terms $\varphi_{VCO}$ at the rate of the reading clock h.

8. A receiver for a data transmission system using the frequency correction method as claimed in Claim 6, characterized in that it comprises :

— read clock means h controlled to effect once synchronized reading of n pairs of in-phase samples x and quadrature samples y stored in the received signal memory (12) and n pairs of in-phase samples X′ and quadrature samples Y′ stored in the synchronizing-word memory (21) ;

— calculating means (19, 20) to form during step 1, from the said read samples x, X′ and y, Y′, one

**0 091 167**

(or several) pair(s) of in-phase partial correlations and one (or several) pair(s) of quadrature partial correlations ;

— first switching means (70, 71) to apply to the calculating means (22, 23) forming a quantity E or the mean value of several quantities E, either the in-phase partial correlations and quadrature partial correlations formed during step 1, or the said partial correlations formed during a step p > 1 ;

— second switching means (73) to apply to a partial correlation memory (72) either the in-phase partial correlations and quadrature partial correlations formed during step 1, or the said partial correlations formed during each step p > 1 ;

— means to form the partial correlations during each step p > 1, comprising :

a) read clock means $H_5$ to read the in-phase partial correlations $c_x$ and quadrature partial correlations $c_y$ stored in the said partial correlation memory (72), at the rate at which they are written into the said memory :

b) calculating means (74) to form from each pair of partial correlations $c_x$, $c_y$ the partial correlations $C_x$, $C_y$ such that :

$$C_x = c_x \cos \varphi'_{VCO} + c_y \sin \varphi'_{VCO}$$

$$C_y = c_y \cos \varphi'_{VCO} - c_x \sin \varphi'_{VCO}$$

$\varphi'_{VCO}$ being a phase correction term corresponding to the said pair of partial correlations $c_x$, $c_y$ ;

c) means (78-82) to form at a rate $H_6$ which is half the clock rate $H_5$, the sums of the pairs of consecutive partial correlations, $C_x$, and the sums of the consecutive pairs of partial correlations, $C_y$, the said sums forming the partial correlations to be used during the following step p + 1 which are applied, *via* the second switching means (73), to the said partial correlation memory (72), and, *via* the first switching means (70, 71), to the said calculating means which produce a quantity E or the mean value of several quantities E ;

— calculating means (24) to form a quantity E* equal to the corrected value of the quantity E or the mean value of several quantities E ;

— means (58) for determining a phase deviation term $\Delta\varphi$ by using, in accordance with the correction effected, at least one of the relations :

$$E^* = \sin \Delta\varphi \left[ \frac{\sin \dfrac{\Delta\varphi}{2}}{b \sin \dfrac{\Delta\varphi}{2b}} \right]^2 , \quad E^* = \sin \Delta\varphi$$

or an approximation of these relations :

— means (75) to accumulate the phase deviation terms $\Delta\varphi$ at an accumulation rate equal to the reading clock rate $H_5$ of the partial correlations from the said partial correlation memory (72), the accumulator being reset to zero ($RAZ_4$) at the beginning of the steps p ⩾ 1 so as to obtain at the output of the accumulator, at the rate of the said clock $H_5$, the phase correction terms $\varphi'_{VCO}$ ;

— means (59) to divide the phase deviation terms $\Delta\varphi$ by a term (b) indicating the length of the synchronizing word portions used during the step under consideration and to obtain thus a frequency deviation term $\Delta f$ ; and finally

— means (18) to accumulate the frequency deviation terms $\Delta f$, the contents of the accumulator being reset to zero ($RAZ_3$) at the beginning of each sampling period in order to obtain at the end of the last step P the frequency correction to be effected on the local carrier.

9. A receiver of a data transmission system as claimed in any one of the Claims 7 or 8, characterized in that the means (19, 20) provided in the receiver for forming the partial correlations until the last step P are *inter alia* controlled, taking account of the final frequency correlation calculated at the end of step P, in order to form the complete in-phase and quadrature correlations relating to the total length of the synchronizing word, additional means being provided to form the sum of the squares of the said in-phase and quadrature complete correlations and for comparing this sum to a threshold ($S_e$), exceeding of this threshold indicating at the same time the acquisition of the frame synchronization and the frequency correction to be effected on the local carrier for the transmission of data following this acquisition of frame synchronization.

10. A receiver of a data transmission system as claimed in Claim 9, in which the received demodulated signal is sampled with a sampling frequency j/T which is a multiple of the modulation rate 1/T, so as to form j sampled signals having the period T and being interleaved, characterized in that the means provided in the receiver for forming the magnitude of the frequency correction and thereafter the sum of the squares of the complete in-phase and quadrature correlations are used in time sharing for each one of the said j interleaved signals, the j sums of the squares of the correlations thus formed during one modulation period being compared to a threshold ($S_e$), exceeding of this threshold indicating at the same time the acquisition of the frame synchronization, the frequency correction to be effected on the local carrier and the optimum position of the sampling instants to be used for the transmission of the data following this acquisition of frame synchronization.

11. A receiver as claimed in any one of the Claims 7 to 10, characterized in that, in order to make the final frequency correction of the local carrier operative after acquisition of frame synchronization, there are provided a memory (88) into which this final frequency correction is stored, means (85) to accumulate the said final frequency correction at a rate equal to the sampling frequency $1/T$, and thus to produce a phase correction term $\Psi_{VCO}$, and calculating means (15) to form from the samples of the received signal $S_r$, $S_i$ the corrected samples $e_r$, $e_i$ such that :

$$e_r = S_r \cos \psi_{VCO} + S_i \sin \psi_{VCO}$$

$$e_i = S_i \cos \psi_{VCO} - S_r \sin \psi_{VCO} .$$

**Patentansprüche**

1. Verfahren zur Frequenzkorrektur des lokalen Trägers im Empfänger eines Datenübertragungssystems, in dem die Daten durch Modulation eines Trägers übertragen werden und ein Synchronisierungswort für den Empfänger vor den Daten übertragen wird, wobei dieser Empfänger Mittel (2-7) aufweist zum Demodulieren des empfangenen Signals mit Hilfe von Signalen in Phase bzw. in Quadratur mit dem lokalen Träger, Mittel (8, 9) zum Abtasten der phasen- und quadraturdemodulierten Signale mit einer der Modulationsrate entsprechenden Abtastfrequenz, wobei jedes auf diese Weise gebildete neue Paar ($S_r$, $S_i$) Phasen- und Quadraturabtastwerte in einem Empfangssignalspeicher (12) eingeschrieben wird, wobei der Empfänger zum Schluss einen Synchronwortspeicher (21) aufweist, der die Phasen- und Quadraturabtastwerte (X', Y') eines lokalen, dem ausgesendeten synchronwort entsprechenden Synchronwortes enthält, dadurch gekennzeichnet, dass während jeder Abtastperiode mindestens einmal das synchrone Auslesen der n Paare von Abtastwerten im Synchronwortspeicher und der n Paare von zuletzt in den Empfangssignalspeicher eingeschriebenen Abtastwerten durchgeführt wird um in P Schritten ($P \geqslant 1$) die Grösse der an dem lokalen Träger durchzuführenden Frequenzkorrektur zu ermitteln, wobei :

— während jedes Schrittes aus den genannten ausgelesenen Abtastwerten mindestens ein Paar In-Phase-Partialkorrelationen $C_r(k - 1)$, $C_r(k)$ und mindestens ein Paar Quadratur-Partialkorrelationen $C_i(k - 1)$, $C_i(k)$ berechnet wird, wobei die Partialkorrelationen der Rangordnung $(k - 1)$ und $(k)$ in jedem Schritt zwei konsekutiven Teile gleicher Länge des lokalen Synchronwortes benutzen, wobei die Partialkorrelationen des Schrittes der Rangordnung $p > 1$ Teile des Synchronwortes benutzen mit einer Länge grösser als die der Teile, die während des vorhergehenden Schrittes der Rangordnung $p - 1$ verwendet wurden, und wobei die Partialkorrelationen des Schrittes mit der Rangordnung $p$ berechnet werden unter Berücksichtigung der am Ende des vorhergehenden Schrittes der Rangordnung $p - 1$ berechneten Frequenzkorrektur ;

— während jedes Schrittes wenigstens eine Grösse

$$E = C_r(k - 1) . C_i(k) - C_i(k - 1) . C_r(k)$$

berechnet wird, die als Funktion des Pegels des empfangenen Signals korrigiert wird um eine korrigierte Grösse E* zu liefern, die eine vorbestimmte Funktion

$$E^* = \sin \Delta\varphi \left[ \frac{\sin \dfrac{\Delta\varphi}{2}}{b \sin \dfrac{\Delta\varphi}{2b}} \right]^2$$

der Phasenabweichung $\Delta\varphi$ ist, die verursacht wird durch die Frequenzabweichung $\Delta f$ zwischen dem lokalen Träger und dem empfangenen Träger während eines Zeitintervalls entsprechend der Anzahl Bits b, welche die Länge der genannten Teile des Synchronwortes bilden ;

— am Ende jedes Schrittes $p \geqslant 1$ aus wenigstens einer korrigierten Grösse E*, die während des Schrittes gebildet wird und welche dieselbe Länge hat wie die gemeinschaftliche Länge der während des Schrittes verwendeten Teile des Synchronwortes, die Frequenzabweichung $\Delta f_p$ berechnet wird, und danach die Summe

$$\sum_{i=1}^{P} \Delta f_i,$$

22

die eine Schätzung der Grösse der Frequenzkorrektur bildet, wobei diese Schätzung am Ende des Schrittes der Rangordnung P der festzuhaltende Endwert ist für die Grösse der an dem lokalen Träger durchzuführenden Frequenzkorrektur.

2. Frequenzkorrekturverfahren nach Anspruch 1 mit wenigstens einem Schritt, in dem mehrere Paare In-Phase-Partialkorrelationen und mehrere Paare Quadratur-Partialkorrelationen berechnet werden, die zum Berechnen mehrerer Grössen E verwendet werden, dadurch gekennzeichnet, dass am Ende dieses Schrittes der Mittelwert der genannten Grössen E berechnet wird, wobei dieser Mittelwert als Funktion des Pegels des empfangenen Signals korrigiert wird zum Bilden des genannten korrigierten Wertes E*, der zum Berechnen der Frequenzabweichung $\Delta f_p$ am Ende jedes Schrittes p verwendet wird.

3. Frequenzkorrekturverfahren nach einem der Ansprüche 1 und 2, dadurch gekennzeichnet, dass jede während eines Schrittes berechnete Grösse E (oder der Mittelwert der während des Schrittes berechneten Grössen E) korrigiert wird durch Teilung der genannten Grösse E (oder des genannten Mittelwertes) durch einen Term gleich der Summe der Quadrate der In-Phase-Partialkorrelationen und der Quadratur-Partialkorrelationen, die zum Berechnen der genannten Grössen E verwendet wurden (oder durch einen Term gleich der Summe der Quadrate der In-Phase-Partialkorrelationen und der Quadratur-Partialkorrelationen, die zum Berechnen des genannten Mittelwertes verwendet wurden), so dass die korrigierte Grösse E* die Funktion E* = sin $\Delta\varphi$ der Phasenabweichung $\Delta\varphi$ wird, wobei diese Grösse E* zum Ermitteln der Frequenzabweichung $\Delta f_p$ am Ende jedes Schrittes p verwendet wird.

4. Frequenzkorrekturverfahren nach einem der Ansprüche 1 bis 3, dadurch gekennzeichnet, dass die Länge der während des Schrittes mit der Rangordnung P verwendeten Synchronwortteile der Hälfte der Länge des Synchronwortes entspricht, die Länge der während eines Schrittes der Rangordnung p (1 < p ⩽ P) verwendeten Synchronwortteile der doppelten Länge der während des Schrittes der Rangordnung p − 1 verwendeten Teile entspricht und die Länge der während des Schrittes 1 verwendeten Synchronwortteile durch die vorhergegebene maximale Frequenzkorrektur bestimmt wird.

5. Frequenzkorrekturverfahren nach einem der Ansprüche 1 bis 4, dadurch gekennzeichnet, dass während jeder Abtastperiode das synchrone Auslesen der n Paare von Abtastwerten in jedem der genannten Speicher (12, 21) P-fach durchgeführt wird, wobei jeder Auslesevorgang einen Schritt zum Ermitteln der Grösse der Frequenzkorrektur erzeugt, wobei die Berücksichtigung der am Ende des Schrittes p − 1 ermittelten Frequenzkorrektur zur Berechnung der Partialkorrelationen des Schrittes p dadurch erhalten wird, dass die Paare von aus dem Empfangssignalspeicher für den Schritt p ausgelesenen Abtastwerten einer Phasenkorrektur entsprechend der Grösse der am Ende des Schrittes p − 1 ermittelten Frequenzkorrektur

$$\sum_{i=1}^{p-1} \Delta f_i$$

unterliegen, wobei diese Phasenkorrektur für die Paare von für den Schritt 1 ausgelesenen Abtastwerten Null beträgt.

6. Frequenzkorrekturverfahren nach einem der vorstehenden Ansprüche 1 bis 4, dadurch gekennzeichnet, dass während jeder Abtastperiode das synchrone Auslesen der n Paare von Abtastwerten in jedem der genannten Speicher einmal durchgeführt wird, welcher Auslesevorgang den Schritt 1 zum Ermitteln der Grösse der Frequenzkorrektur erzeugt, wobei die Partialkorrelationen des Schrittes 1 unmittelbar aus den genannten ausgelesenen Abtastwerten berechnet werden und wobei jede der Partialkorrelationen eines Schrittes p > 1 durch Bildung der Summe zweier während des vorhergehenden Schrittes p − 1 berechneten Partialkorrelationen der Rangordnung (k − 1) und (k) berechnet wird und einer Phasenkorrektur ausgesetzt wird, die der am Ende des Schrittes p − 1 ermittelten Frequenzabweichung $\Delta f_{p-1}$ entspricht.

7. Empfänger für ein Datenübertragungssystem unter Anwendung des Frequenzkorrekturverfahrens nach Anspruch 5, dadurch gekennzeichnet, dass dieser Empfänger die folgenden Elemente aufweist :
— Mittel zum Erzeugen von Auslesetaktimpulsen h, die gesteuert werden zum P-fachen Durchführen des synchronen Auslesens von n Paaren In-Phase-Abtastwerte x und Quadratur-Abtastwerte y, die im Empfangssignalspeicher (12) gespeichert sind, und von n Paaren In-Phase-Abtastwerte X' und Quadratur-Abtastwerte Y', die im Synchronwortspeicher (21) gespeichert sind ;
— Rechenmittel (15) um aus jedem Paar von Abtastwerten x, y die Abtastwerte X, Y derart zu bilden, dass

$$X = x \cos \varphi_{VCO} + y \sin \varphi_{VCO}$$

$$Y = y \cos \varphi_{VCO} - x \sin \varphi_{VCO}$$

wobei $\varphi_{VCO}$ ein Term der genannten Phasenkorrektur ist, der dem genannten Paar von Abtastwerten x, y entspricht ;
— Rechenmittel (19, 20) um aus den Abtastwerten X, X' und Y, Y' ein (oder mehrere) Paar(e) In-Phase-Partialkorrelationen und ein (oder mehrere) Paar(e) Quadratur-Partialkorrelation zu bilden ;
— Rechenmittel (22, 23) um aus den genannten Partialkorrelationen eine Grösse E oder den Mittelwert mehrerer Grössen E zu bilden ;

— Rechenmittel (24) um eine Grösse E* entsprechend den korrigierten Wert der Grösse E oder des Mittelwertes mehrerer Grössen E zu bilden ;

— Mittel zum Ermitteln eines Phasenabweichungsterms $\Delta\varphi$ unter Verwendung, entsprechend der durchgeführten Korrektur, wenigstens einer der Beziehungen :

$$E^* = \sin \Delta\varphi \left[ \frac{\sin \dfrac{\Delta\varphi}{2}}{b \sin \dfrac{\Delta\varphi}{2\,b}} \right]^2 \ , \quad E^* = \sin \Delta\varphi$$

oder eine Annäherung dieser Beziehungen ;

— Mittel zum Teilen der Phasenabweichung $\Delta\varphi$ durch einen Term (b), der die Länge der während des betreffenden Schrittes verwendeten Synchronwortteile angibt, und zum auf diese Weise Erhalten eines Frequenzabweichungstermes $\Delta f$ ;

— Mittel (18) zum Akkumulieren der Frequenzabweichungsterme $\Delta f$, wobei der Inhalt des Akkumulators am Anfang jeder Abtastperiode auf Null rückgesetzt wird ($RAZ_3$) um am Ende jedes Schrittes p einen Korrekturterm für die Frequenz $f_{VCO}$ zu erhalten und am Ende des letzten Schrittes P die Endfrequenzkorrektur ; und

— Mittel (17) zum Akkumulieren der Korrekturterme für die Frequenz $f_{VCO}$ mit einer Akkumulationsgeschwindigkeit, die der Geschwindigkeit des genannten Auslesetaktes h entspricht, wobei der Inhalt des Akkumulators am Anfang jedes Schrittes p auf Null rückgesetzt wird ($RAZ_4$) um mit der Geschwindigkeit des Auslesetaktes h die Phasenkorrekturterme $\varphi_{VCO}$ zu erhalten.

8. Empfänger für ein Datenübertragungssystem unter Verwendung des Frequenzkorrekturverfahrens nach Anspruch 6, dadurch gekennzeichnet, dass der Empfänger die folgenden Elemente aufweist :

— Mittel zum Erzeugen von Auslesetaktimpulsen h, die gesteuert werden zum einmaligen Durchführen des synchronen Auslesens von n Paaren In-Phase-Abtastwerte x und Quadratur-Abtastwerte y, die im Empfangssignalspeicher (12) gespeichert sind, und von n Paaren In-Phase-Abtastwerte X' und Quadratur-Abtastwerte Y', die im Synchronwortspeicher (21) gespeichert sind ;

— Rechenmittel (19, 20) um während des Schrittes 1 aus den genannten ausgelesenen Abtastwerten x, X' und y, Y' ein (oder mehrere) Paar(e) In-Phase-Partialkorrelationen und ein (oder mehrere) Paar(e) Quadratur-Partialkorrelationen zu bilden ;

— erste Schaltmittel (70, 71) um den Rechenmitteln (22, 23), die eine Grösse E oder den Mittelwert mehrerer Grössen E bilden, entweder die In-Phase-Partialkorrelationen und Quadratur-Partialkorrelationen, die während des Schrittes 1 gebildet sind, oder die genannten Partialkorrelationen, die während eines Schrittes p > 1 gebildet sind, zuzuführen ;

— zweite Schaltmittel (73) um einem Partialkorrelationsspeicher (72) entweder die In-Phase-Partialkorrelationen und Quadratur-Partialkorrelationen, die während des Schrittes 1 gebildet sind, oder die genannten Partialkorrelationen, die während jedes Schrittes p > 1 gebildet sind, zuzuführend ;

— Mittel zum Bilden der Partialkorrelationen während jedes Schrittes p > 1, mit :

a) Auslesetaktimpulsmitteln $H_5$ zum Auslesen der im genannten Partialkorrelationsspeicher (72) gespeicherten In-Phase-Partial-korrelationen $c_x$ und Quadratur-Partialkorrelationen $c_y$ mit der Geschwindigkeit, mit der sie in den genannten Speicher eingeschrieben worden sind ;

b) Rechenmitteln (74) um aus jedem Paar Partialkorrelationen $c_x$ $c_y$ die Partialkorrelationen $C_x$, $C_y$ derart zu bilden, dass

$$C_x = c_x \cos \varphi'_{VCO} + c_y \sin \varphi'_{VCO}$$

$$C_y = c_y \cos \varphi'_{VCO} - c_x \sin \varphi'_{VCO}$$

wobei $\varphi'_{VCO}$ ein Phasenkorrekturterm ist, der dem genannten Paar Partialkorrelationen $c_x$, $c_y$ entspricht ;

c) Mitteln (78-82) um mit einer Geschwindigkeit $H_6$ entsprechend der halben Taktgeschwindigkeit $H_5$ die Summen der aufeinanderfolgenden Paare Partialkorrelationen $C_x$ und die Summen der aufeinanderfolgenden Paare Partialkorrelationen $C_y$ zu bilden, wobei die genannten Summen die während des folgenden Schrittes (p + 1) zu verwendenden Partialkorrelationen bilden, die über die zweiten Schaltmittel (73) dem genannten Partialkorrelationsspeicher (72) zugeführt werden und über die ersten Schaltmittel (70, 71) den genannten Rechenmitteln (22, 23) zugeführt werden, die eine Grösse E oder den Mittelwert mehrerer Grössen E bilden ;

— Rechenmittel (24) zum Bilden einer Grösse E* entsprechend dem korrigierten Wert der Grösse E oder dem korrigierten Mittelwert mehrerer Grössen E ;

— Mittel (58) zum Ermitteln eines Phasenabweichungsterms $\Delta\varphi$ unter Verwendung, entsprechend der durchgeführten Korrektur, wenigstens einer der Beziehungen :

$$E^* = \sin \Delta\varphi \left[ \frac{\sin \dfrac{\Delta\varphi}{2}}{b \sin \dfrac{\Delta\varphi}{2\,b}} \right]^2 \quad , \quad E^* = \sin \Delta\varphi$$

oder einer Annäherung dieser Beziehungen ;

— Mittel (75) zum Akkumulieren der Phasenabweichungsterme $\Delta\varphi$ mit einer Akkumulatorgeschwindigkeit entsprechend der Auslesetaktgeschwindigkeit $H_5$ der Partialkorrelationen aus dem genannten Partialkorrelationsspeicher (72), wobei der Akkumulator am Anfang der Schritte $p \geqslant 1$ auf Null rückgestellt wird ($RAZ_4$) um an dem Ausgang des Akkumulators mit der Geschwindigkeit des genannten Taktes $H_5$ die Phasenkorrekturterme $\varphi'_{VCO}$ zu erhalten ;

— Mittel (59) zum Teilen der Phasenabweichungsterme $\Delta\varphi$ durch einen Term (b) der die Länge der während des betreffenden Schrittes verwendeten Synchronwortteile angibt, und zum auf diese Weise Erhalten eines Frequenzabweichungstermes $\Delta f$ ; und

— Mittel (18) zum Akkumulieren der Frequenzabweichungsterme $\Delta f$, wobei der Inhalt des Akkumulators am Anfang jeder Abtastperiode auf Null rückfestellt wird ($RAZ_3$) um am Ende des letzten Schrittes P die an dem lokalen Träger durchzuführende Frequenzkorrektur zu erhalten.

9. Empfänger eines Datenübertragungssystems nach einem der Ansprüche 7 oder 8, dadurch gekennzeichnet, dass die in dem Empfänger vorgesehenen Mittel (19, 20) zum Bilden der Partialkorrelationen bis an den letzten Schritt P u. a. gesteuert sind um, unter Berücksichtigung der Am Ende des Schrittes P berechneten Endfrequenzkorrektur, die vollständigen In-Phase- und Quadratur-Korrelationen in bezug auf die Gesamtlänge des Synchronwortes zu bilden, wobei zusätzliche Mittel vorgesehen sind um die Summe der Quadrate der genannten vollständigen In-Phase- und Quadratur-Korrelationen zu bilden und um diese Summe mit einer Schwelle ($S_e$) zu vergleichen, wobei das Überschreiten dieser Schwelle gleichzeitig das Erreichen der Rahmensynchronisierung und die Frequenzkorrektur angibt, die an dem lokalen Träger für die nach diesem Erreichen der Rahmensynchronisierung erfolgende Datenübertragung durchzuführen ist.

10. Empfänger eines Datenübertragungssystem nach Anspruch 9, wobei das demodulierte empfangene Signal mit einer Abtastfrequenz j/T entsprechend einem Vielfachen der Modulationsgeschwindigkeit 1/T wird abgetastet um j verflochtene, je mit einer Periode T abgetastete Signale zu bilden, dadurch gekennzeichnet, dass die Mittel, die in dem Empfänger die Grösse der Frequenzkorrektur und danach die Summe der Quadrate der vollständigen In-Phase- und Quadratur-Korrelationen bilden, in Zeitmultiplex verwendet werden für jedes des genannten j verflochtenen Signale, wobei die j Summen der Quadrate der auf diese Weise während einer Modulationsperiode gebildeten Korrelationen mit einer Schwelle ($S_e$) verglichen werden, wobei das Überschreiten dieser Schwelle gleichzeitig das Erreichen der Rahmensynchronisierung angibt, sowie die an dem lokalen Träger durchzuführende Frequenzkorrektur und die optimale Lage der Abtastzeitpunkte, welche für die nach diesem Erreichen der Rahmensynchronisierung erfolgende Datenübertragung zu verwenden sind.

11. Empfänger nach einem der Ansprüche 7 bis 10, dadurch gekennzeichnet, dass zum Durchführen der Endfrequenzkorrektur des lokalen Trägers nach dem Erreichen der Rahmensynchronisierung ein Speicher (88) für die Speicherung dieser Endfrequenzkorrektur vorgesehen ist, Mittel (85) zum Akkumulieren der genannten Endfrequenzkorrektur mit einer der Abtastfrequenz 1/T entsprechenden Geschwindigkeit um auf diese Weise ein Phasenkorrekturterm $\Psi_{VCO}$ zu erzeugen, und Rechenmittel (15) um aus den Abtastwerten des empfangenen Signals $S_r$, $S_i$ die korrigierten Abtastwerte $e_r$, $e_i$ derart zu bilden, dass :

$$e_r = S_r \cos \psi_{VCO} + S_i \sin \psi_{VCO}$$

$$e_i = S_i \cos \psi_{VCO} - S_r \sin \psi_{VCO} \,.$$

FIG.1

FIG.2

FIG.3

0 091 167

FIG.4

FIG.5

FIG.6

FIG.7

FIG.8

0 091 167

FIG.9

FIG.10

FIG.11